# EUROPÄISCHE PATENTSCHRIFT

(11) **EP 3 064 382 B1**
(45) Veröffentlichungstag und Bekanntmachung des Hinweises auf die Patenterteilung: **07.03.2018**
(21) Anmeldenummer: 16151724.8
(22) Anmeldetag: 05.04.2012
(51) Int. Cl.: B60D 1/06, B60D 1/30, B60D 1/58, B60D 1/62

(54) **ANHÄNGEKUPPLUNG MIT EINEM MITNEHMER**
DRAW BAR COUPLING WITH AN ACTUATOR
ATTELAGE DOTE D'UN ENTRAINEUR

(30) Priorität: 12.04.2011 DE 202011005144 U; 29.07.2011 EP 11006270; 20.01.2012 DE 102012000966; 08.02.2012 DE 102012002335
(43) Veröffentlichungstag der Anmeldung: 07.09.2016
(62) Teilanmeldung aus: 12002477.3
(73) Patentinhaber: WESTFALIA - Automotive GmbH, 33378 Rheda-Wiedenbrück (DE)
(72) Erfinder: Sielhorst, Bernhard, 33378 Rheda-Wiedenbrück (DE)
(74) Vertreter: Patentanwälte Bregenzer und Reule Partnerschaftsgesellschaft mbB

(56) Entgegenhaltungen:
- EP-A1- 2 332 750
- GB-A- 2 342 630
- US-A- 3 947 839

## Beschreibung

Die Erfindung betrifft eine Anhängekupplung für ein Kraftfahrzeug, insbesondere ein Personen-Kraftfahrzeug, zum Anhängen eines Anhängers an das Kraftfahrzeug, mit einem an dem Kraftfahrzeug befestigbaren Kuppelkörperträger und einem an einem freien Endbereich des Kuppelkörperträgers angeordneten, insbesondere außenseitig kugelförmigen, Kuppelkörper, gemäß dem Oberbegriff des Anspruchs 1.

Eine derartige Anhängekupplung ist z.B. in EP 2 332 750 A1 beschrieben.

Die bekannte Anhängekupplung weist einen optischen Sensor auf, der aktiv quasi die Zugkupplungsaufnahme beleuchtet, wobei dieser das Licht zu einem in der Sensoraufnahme angeordneten optischen Sensor reflektiert. Der Sensor erzeugt ein Winkelsignal in Abhängigkeit von einer Winkelstellung der Zugkupplungsaufnahme relativ zum Kuppelkörper, in diesem Fall einer Kupplungskugel.

Ein weiteres Beispiel einer gattungsgemäßen Anhängekupplung wird in der US 3,947,839 gezeigt.

Die Erfassung einer Winkelstellung des Anhängers relativ zum Zugfahrzeug kann für vielfältige Zwecke genutzt werden, beispielsweise um ein Rückwärtseinparken des Gespanns zu erleichtern, um Maßnahmen zur Erhöhung der Fahrstabilität des Gespanns herzustellen oder dergleichen.

Die zur Winkelerfassung erforderlichen Komponenten sollten an der Anhängekupplung einfach montierbar sein, möglichst auch nachträglich, so dass eine vorhandene Anhängekupplung mit dem Winkelerfassungssystem nachgerüstet werden kann.

Es ist also die Aufgabe der vorliegenden Erfindung, eine Anhängekupplung mit einem zuverlässigen, insbesondere einfach montierbaren, System zur Winkelerfassung der Zugkupplung relativ zur Anhängekupplung bereitzustellen.

Zur Lösung der Aufgabe ist eine Anhängekupplung gemäß der technischen Lehre des Anspruchs 1 vorgesehen.

Ein vorteilhafter Mitnehmer weist einen z.B. radial oder axial innen bezüglich des Kuppelkörpers angeordneten Träger und ein radial oder axial außen bezüglich des Kuppelkörpers an dem Träger angeordnetes Mitnahmeteil auf, beispielsweise einen Mitnahmering, wobei das Mitnahmeteil zur Mitnahme durch die Zugkupplungsaufnahme vorgesehen ist.

Während der Träger zweckmäßigerweise am Kuppelkörper verbleibt, kann das Mitnahmeteil ausgetauscht werden. Es versteht sich, dass mehrere Mitnahmeteile vorgesehen sein können, d.h. nicht nur ein Mitnahmeteil.

Das Mitnahmeteil steht zweckmäßigerweise vor eine Außenoberfläche, z.B. eine Kugeloberfläche, des Kuppelkörpers nach außen vor. Der Träger hingegen steht zweckmäßigerweise nicht vor eine Außenoberfläche des Kuppelkörpers nach außen vor - wobei dies durchaus möglich wäre. Es ist prinzipiell auch möglich, dass das Mitnahmeteil nicht vor eine Außenoberfläche, z.B. eine Kugeloberfläche, des Kuppelkörpers nach außen vorsteht. In diesem Fall könnte beispielsweise ein in einen Innenraum der Zugkupplungsaufnahme vorstehender Vorsprung der Zugkupplung des Anhängers mit dem Mitnahmeteil in Eingriff gelangen.

Es versteht sich, dass der Träger auch Abschnitte aufweisen kann, die beispielsweise zur Außenoberfläche des Kuppelkörpers vorstehen, beispielsweise Abschnitte, zwischen denen das Mitnahmeteil angeordnet ist. Weiterhin ist es auch möglich, dass am Träger insbesondere innen bezüglich der Außenoberfläche des Kuppelkörpers noch weitere Bauteile angeordnet sind, so dass beispielsweise der Träger mit einem Gleitring oder einem sonstigen Gleitkörper versehen ist, mit dem der Träger am Kuppelkörper beweglich, insbesondere drehbeweglich oder schiebebeweglich, gelagert ist.

Das erfindungsgemäße Konzept ist beispielsweise bei einem ringförmigen Mitnehmer anwendbar. Der Mitnehmer ist beispielsweise drehbar an dem Kuppelkörper gelagert. Aber auch verschieblichen Mitnehmer können nach dem erfindungsgemäßen Konzept aufgebaut sein. Der Mitnehmer ist beispielsweise linear verschieblich an dem Kuppelkörper gelagert und kann von der Zugkupplungsaufnahme verschoben werden, beispielsweise linear.

Das Mitnahmeteil selbst ist als ein auswechselbares Bauteil ausgestaltet, so dass es bei Verschleiß entfernt und am Träger ein unverschlissenes Mitnahmeteil befestigbar ist.

Das Mitnahmeteil ist vorteilhaft mit dem Träger verrastbar und/oder verklemmbar und/oder verklebt.

Es ist auch möglich, dass Komponenten des Mitnehmers, z.B. Komponenten des Mitnahmeteils und/oder des Trägers, und/oder das Mitnahmeteil mit dem Träger, miteinander verschweißt sind, z.B. mittels Ultraschallschweißens.

Es ist z.B. möglich, dass an dem Mitnahmeteil eine Klebeschicht angeordnet ist, die vorteilhaft durch eine Schutzfolie abgedeckt ist. Nach Abziehen der Schutzfolie liegt die Klebeschicht frei und das Mitnahmeteil kann auf den Träger aufgeklebt werden.

Bevorzugt sind am Träger und/oder am Mitnahmeteil Montagekodierungen, insbesondere Drehwinkelkodierungen vorhanden, so dass das Mitnahmeteil am Träger nur in einer vorbestimmten Montageposition, beispielsweise Drehwinkelposition, montierbar ist. Die Montagekodierungen umfassen beispielsweise zueinander passende Kodier-Vorsprünge und Kodier-Aufnahmen am Träger und am Mitnahmeteil oder umgekehrt. Eine Montagekodierung kann auch eine Poka Yoke sein oder als solche bezeichnet werden.

Der Träger kann beispielsweise mehrteilig sein, beispielsweise zweiteilig. Der Träger umfasst beispielsweise miteinander verbundene Träger- oder Ringsegmente. Die Verbindung des Trägers miteinander kann auch durch das Mitnahmeteil erfolgen.

Vorteilhaft ist es, wenn die Träger- oder Ringsegmente des Trägers miteinander direkt verbunden sind, beispielsweise durch Rastvorsprünge, Haken oder dergleichen. Es versteht sich, dass die Ringsegmente auch miteinander verklebt oder verschweißt sein können.

Besonders bevorzugt ist eine Rastverbindung oder Hakenverbindung zwischen Träger und Mitnahmeteil. Beispielsweise können das oder die Mitnahmeteile Rastvorsprünge oder Hakenvorsprünge oder beides aufweisen, die in korrespondierende Rastaufnahmen oder Hakenaufnahmen am Träger oder einem Trägersegment einrastbar bzw. einhakbar sind. Es versteht sich, dass auch umgekehrt am Träger Rastvorsprünge oder Rasthaken vorgesehen sein können, die in entsprechende Rastaufnahmen oder Hakenaufnahmen an dem Mitnahmeteil oder den Mitnahmeteilen eingreifen.

Der Träger weist beispielsweise eine Aufnahme für das Mitnahmeteil auf. Die Aufnahme ist beispielsweise als eine Ringnut ausgestaltet.

Eine bevorzugte Ausführungsform der Erfindung sieht vor, dass der Träger in einer Lageraufnahme des Kuppelkörpers beweglich gelagert ist und Lagerflächen zur Lagerung in der Lageraufnahme aufweist. Das Mitnahmeteil ist zweckmäßigerweise zwischen den Lagerflächen, beispielsweise Seitenwänden, des Trägers aufgenommen, hat jedoch keinen Berührkontakt mit der Lageraufnahme des Kuppelkörpers. Somit kann beispielsweise ein Träger aus einem relativ harten, gleitfähigem Material verwendet werden, während das Mitnahmeteil oder die Mitnahmeteile, die eher für einen Reibschluss oder Formschluss ausgelegt sind, keine Berührung mit der Lageraufnahme haben.

Weiterhin ist es vorteilhaft, wenn am Träger und Mitnahmeteil kooperierende Drehmitnahmemittel, z.B. mindestens ein Drehmitnahmevorsprung am einen Bauteil (Träger oder Mitnahmeteil), der in eine Drehmitnahmeaufnahme am andern Bauteil (Mitnahmeteil oder Träger) eingreift, vorgesehen sind.

Zwischen dem Mitnahmeteil und dem Träger oder am Mitnahmeteil und/oder am Träger ist zweckmäßigerweise eine Kompressionsschicht vorgesehen. Die Kompressionsschicht besteht oder enthält ein leicht komprimierbares Material, zum Beispiel Polyurethan. Beispielsweise ist die Kompressionsschicht am Boden der Aufnahme für das Mitnahmeteil vorgesehen. Die Kompressionsschicht kann einen Bestandteil des Trägers und/oder des Mitnahmeteils bilden oder vom Träger und Mitnahmeteil separat sein.

Die Kompressionsschicht ist radial nachgiebig, so dass das Mitnahmeteil unter Komprimierung der Kompressionsschicht in Richtung des Trägers verformbar ist, also nachgibt. Bei dieser Konstruktion können beispielsweise der Träger und das Mitnahmeteil relativ hart und/oder biegesteif sein, also verschleißfest. Die Nachgiebigkeit ist vorzugsweise im Innern des Mitnehmers vorgesehen, zwischen dem Träger und dem Mitnahmeteil.

Das Mitnahmeteil besteht beispielsweise aus einem relativ abriebfesten Material, z.B. aus einer insbesondere 2mm starken PU Folie in 85 Shore A oder bis zu 95 Shore A mit großen Reißdehnung, zum Beispiel größer als 400-500, insbesondere größer als 600. Eine weitere Lage des Mitnahmeteils kann beispielsweise aus Sylomer bestehen oder ein solches Material umfassen.

Der Mitnehmer, insbesondere das Mitnahmeteil, ist zweckmäßigerweise riemenartig oder umfasst einen Riemen.

Bevorzugt hat der Mitnehmer, insbesondere das Mitnahmeteil, nach außen, insbesondere radial außen, vorstehende Mitnahmevorsprünge und/oder eine Reibschlussfläche.

Die Mitnahmevorsprünge sind zweckmäßigerweise flexibel oder elastisch oder beides. Somit können die Mitnahmevorsprünge durch die Zugkupplung, insbesondere die Zugkupplungsaufnahme, verformt werden, so dass sie flexibel und elastisch an deren Innenoberfläche anliegen.

Die Mitnahmevorsprünge, auch in nicht elastischer Ausführung, und/oder ebenfalls vorteilhafte Schlitze am Mitnahmeteil haben auch den Vorteil, dass Verschmutzungen, z.B. Sand, Dreck oder sonstige Materialien, zwischen die Mitnahmevorsprünge gelangen können und so keine direkte Kraft auf im Innern des Mitnehmers befindliche Komponenten, z.B. die nachfolgend noch beschriebenen Magnete, ausüben können. Beispielsweise ist der Mitnehmer geschlitzt, so dass dadurch Mitnahmevorsprünge gebildet sind.

Eine an sich eigenständige Erfindung, insbesondere in Verbindung mit den Merkmalen des Oberbegriffs des Anspruchs 1, stellt die nachfolgende Ausführungsform dar. Bei dieser Ausführungsform muss der Mitnehmer selbstverständlich nicht mehrteilig sein, muss jedenfalls nicht aus einem Träger und einem Mitnahmeteil bestehen, sondern kann beispielsweise auch insgesamt einstückig sein oder teilweise einstückig sein, z.B. radial und/oder in Umfangsrichtung. Eine Kombination dieser Ausführungsform mit anderen oben oder weiter unten beschriebenen Maßnahmen ist möglich.

Der Mitnehmer, insbesondere das Mitnahmeteil, haben zweckmäßigerweise mindestens einen Mitnahmevorsprung oder mindestens eine Mitnahmevertiefung, die zum formschlüssigen Eingriff in eine passende Gegenkontur oder mit einer passenden Gegenkontur der Zugkupplung vorgesehen sind, beispielsweise in eine korrespondierende Mitnahmevertiefung oder für einen Mitnahmevorsprung der Zugkupplung. Bevorzugt ist es beispielsweise, wenn mindestens eine Mitnahmevertiefung für eine Haltebacke der Zugkupplung vorhanden ist. Es versteht sich, dass vorteilhaft mehrere derartige Mitnahmevertiefungen in definierten Winkelabständen über einen Außenumfang des Mitnehmers vorhanden sind, so dass in definierten Positionen eine Mitnahmekopplung zwischen dem Mitnehmer und der Zugkupplung möglich ist, insbesondere eine Drehmitnahme.

Die Mitnahmevertiefung ist beispielsweise durch einen Bereich zwischen Mitnahmevorsprüngen vorgesehen, die zum reibschlüssigen und/oder formschlüssigen Kontakt mit der Zugkupplung vorgesehen sind.

Die Mitnahmevertiefung oder die Mitnahmevorsprünge haben zweckmäßigerweise Verstärkungen, beispielsweise verstärkte Randbereiche, so dass eine Beschädigung beispielsweise durch die vorgenannte Haltebacke der Zugkupplung vermieden wird.

Die nachfolgenden Ausführungen beziehen sich auf ein bevorzugtes Mitnahmeteil, das besonders einfach austauschbar an einem Träger angeordnet ist.

Das Mitnahmeteil weist zweckmäßigerweise einen lang gestreckten, biegeflexiblen Körper auf oder ist dadurch gebildet und kann an die Außenkontur des Trägers angepasst werden. Somit ist es ohne weiteres an dem bereits am Kuppelkörper montierten Träger lösbar verbindbar. Der biegeflexible Körper hat also vorzugsweise ein erstes Längsende und ein zweites Längsende.

Bevorzugt ist es, wenn der Träger eine Aufnahme, zum Beispiel eine Steckaufnahme, aufweist, in der ein Endbereich des Mitnahmeteils, insbesondere des vorgenannten lang gestreckten Mitnahmeteils, aufgenommen ist. Die Aufnahme kann beispielsweise nach radial außen am Träger offen sein, so dass der Endbereich des Mitnahmeteils von radial außen her in die Aufnahme eingesteckt werden kann. Es ist aber auch möglich, dass die Aufnahme beispielsweise eine tangential oder in einem Winkel zwischen einer Tangente und einer Radiallinie offene Aufnahme ist, so dass der Endbereich des Mitnahmeteils beispielsweise schräg bezüglich einer Radiallinie bzw. einer Tangente eingesteckt werden kann. Bevorzugt ist an der Aufnahme mindestens eine Wandung vorhanden, die bei montiertem Mitnahmeteil und Gebrauch der Anhängekupplung zwischen dem Mitnahmeteil und der Zugkugelkupplung oder einem Außenumfang des Mitnahmeteils angeordnet ist.

Die Aufnahme für den Endbereich des Mitnahmeteils hat zweckmä-ßigerweise mindestens eine Hakenvertiefung, Rastvertiefungen oder dergleichen andere Hakenverbindungsmittel oder Rastverbindungsmittel, alternativ oder ergänzend auch Klemm-Verbindungsmittel, zum festen Halt des Endbereich des Mitnahmeteils in der Aufnahme.

Der Mitnehmer, insbesondere das Mitnahmeteil, ist vorzugsweise in der Art eines Zahnriemens ausgestaltet.

Der Zahnriemen kann zum Beispiel ein ringförmiger Zahnriemen sein. Besonders bevorzugt ist jedoch, wenn der Zahnriemen ein biegeflexibler Riemen ist, der eine Längsgestalt aufweist und somit an die Außenkontur des Trägers anpassbar ist und mit dem bereits am Kuppelkörper montierten Träger lösbar verbindbar ist.

Der Mitnehmer und/oder ein Lagerbereich des Kuppelkörpers zum Lagern des Mitnehmers sind zweckmäßigerweise mit einer Gleitbeschichtung oder einer Gleitlage versehen. Dadurch ist das Drehen des Mitnehmers an dem Kuppelkörper erleichtert.

Bezüglich der Sensoranordnung sind verschiedene Techniken möglich:
Der Mitnehmer umfasst vorteilhaft mindestens einen Sensor und/oder mindestens einen Geber zum Betätigen des mindestens einen Sensors, insbesondere eine Magnetanordnung mit mindestens einem Magneten und/oder einen optischen Geber, insbesondere eine Reflexionsmarkierung, und/oder ein magnetisiertes Kunststoffmaterial mit magnetischen Partikeln.

Beispielsweise ist mindestens ein Sensor, zum Beispiel ein optischer Sensor, ein induktiver oder magnetischer Sensor oder dergleichen ortsfest am Kuppelkörper, beispielsweise in der Sensoraufnahme, angeordnet, während einer oder mehrere Geber an dem Mitnehmer angeordnet sind. Es ist aber prinzipiell auch möglich, dass beispielsweise ein Sensor am Mitnehmer angeordnet ist, der von einem ortsfest am Kuppelkörper, zum Beispiel in der Sensoraufnahme, angeordneten Geber betätigbar ist. Bei dem Geber handelt es sich beispielsweise um eine Lichtquelle, einen Magneten, oder dergleichen.

Bevorzugt ist ein magnetisches Prinzip, d.h. der Sensor umfasst einen oder mehrere Sensorkomponenten, die magnetisch aktivierbar sind. Beispielsweise handelt es sich bei dem Sensor um einen magnetisch resistiven Sensor, insbesondere einen GMR- oder AMR-Sensor. Es versteht sich, dass die Erfindung nicht auf magnetische Sensoren beschränkt ist, d.h. dass beispielsweise auch optische Sensoren möglich sind, was später noch deutlich wird.

In Zusammenwirkung mit dem magnetischen Sensor und der magnetischen Sensoranordnung weist der Mitnehmer zweckmäßigerweise eine Magnetanordnung mit einem oder mehreren Magneten auf. Wenn mehrere Magnete vorhanden sind, sind ihre Pole zweckmäßigerweise in Umfangsrichtung des Mitnehmers zueinander beabstandet. Beispielsweise sind mehrere Magnete, insbesondere zwei oder mehr Magnete, in Umfangsrichtung hintereinander angeordnet, wobei die Polarität der Magnete zweckmäßigerweise gleich orientiert ist, d.h. dass ein Südpol des einen Magneten neben einem Nordpol des benachbarten Magneten angeordnet ist. Es versteht sich, dass jedoch auch eine umgekehrte Magnetisierung möglich ist, d.h. dass einander gegenüberliegende Südpole oder Nordpole vorgesehen sind. Weiterhin ist es denkbar, einen ringförmigen Magneten vorzusehen.

Der Mitnehmer umfasst zweckmäßigerweise mindestens eine Sensorteilaufnahme, vorteilhaft eine Anordnung von Sensorteilaufnahmen, die zum Aufnehmen mindestens eines Gebers, zum Beispiel eines Magneten, oder zur Aufnahme eines Sensors ausgestaltet sind. Diese mindestens eine Sensorteilaufnahme ist zweckmäßigerweise an einem Innenumfang des Mitnehmers angeordnet. Beispielsweise ist die mindestens eine Sensorteilaufnahme als Steckaufnahme oder Tasche ausgestaltet. Somit können der Geber oder der Sensor in eine jeweilige Steckaufnahme eingesteckt werden. Bevorzugt sind Rastmittel zum Verrasten des jeweiligen Gebers oder Sensors in der Sensorteilaufnahme des Mitnehmers vorgesehen. Bevorzugt ist es, dass der Geber oder Sensor auswechselbar am Mitnehmer aufgenommen ist. An dieser Stelle sei bemerkt, dass selbstverständlich ein Geber oder Sensor auch fest mit dem Mitnehmer verbunden sein kann, beispielsweise verklebt oder in ein Material des Mitnehmers eingegossen oder eingebettet sein kann.

Des Weiteren kann der Mitnehmer auch aus einem magnetischen Kunststoffmaterial oder einem magnetisierbaren Kunststoffmaterial bestehen oder ein solches Kunststoffmaterial aufweisen.

Es ist aber auch möglich, dass der Mitnehmer einen optischen Geber, z.B. eine Reflektionsmarkierung, einen Strichcode oder dergleichen aufweist, mit der der Sensor, in diesem Fall ein optischer Sensor, zusammenwirkt.

Die Magnetisierung des Mitnehmers oder eines Teils desselben kann beispielsweise anhand von magnetischem Material, z.B. Metallsplittern, seltenen Erden oderdergleichen, erfolgen.

Bei der nachfolgend beschriebenen erfindungsgemäßen Ausführungsform muss der Mitnehmer selbstverständlich nicht mehrteilig sein, muss jedenfalls nicht aus einem Träger und einem Mitnahmeteil bestehen, sondern kann beispielsweise auch insgesamt einstückig sein oder teilweise einstückig sein, z.B. radial und/oder in Umfangsrichtung. Eine Kombination der erfindungsgemäßen Ausführungsform mit anderen oben oder weiter unten beschriebenen Maßnahmen ist möglich.

Die Erfindung sieht nämlich vor, dass der Mitnehmer, insbesondere der Träger, eine Reihe entlang einer Reihenlinie nebeneinander angeordneter Sensorteilaufnahmen für Sensorgeber oder Sensorelemente (oder beides) aufweist, in denen ein Einsteckkörper mit mehreren Sensorgebern und/oder Sensorelementen angeordnet ist. Die Sensorteilaufnahme kann auch eine langgestreckte Gestalt haben, so dass auch eine einzige, langgestreckte Sensorteilaufnahme ausreicht, in die der Einsteckkörper eingesteckt werden kann. Der Einsteckkörper kann beispielsweise seinerseits flexibel sein, so dass er an eine Ringform des Trägers (wenn dieser als Ring ausgestaltet ist) anpassbar ist. In oder an dem Einsteckkörper sind die Sensorgeber oder Sensorelemente entlang der Reihenlinie angeordnet. Es ist auch möglich, dass der Einsteckkörper die Sensorgeber integral bildet. Beispielsweise kann der Einsteckkörper aus einem magnetisierbaren Kunststoff bestehen, d.h. aus einem Kunststoffmaterial, das beispielsweise Eisenfeilspäne oder andere magnetisierbare Komponenten enthält. Bevorzugt ist es, wenn die Sensorgeber, beispielsweise Magnete, abwechselnd, d.h. mit unterschiedlicher Polarität, polarisiert sind.

Der Mitnehmer, insbesondere der Träger, weist mindestens eine Sensorteilaufnahme zur Aufnahme eines Sensorgebers oder eines Sensorelements auf. Bevorzugt ist diese Sensorteilaufnahme oder Anordnung von Sensorteilaufnahmen durch einen Deckel oder eine Deckelanordnung verschließbar. Der Deckel kann gleichzeitig auch ein Lagerelement bilden oder eine Lagehfläche zur Lagerung in einer Lageraufnahme am Kuppelkörper bereitstellen.

Der Kuppelkörper weist vorteilhaft eine Sensoraufnahme auf, in der eine Komponente einer Sensoranordnung, insbesondere mindestens ein Sensor, zur Erfassung einer Winkelstellung der Zugkupplung relativ zu dem Kuppelkörperträger angeordnet oder anordenbar ist.

Beispielsweise ist mindestens ein Sensor, zum Beispiel ein optischer Sensor, ein induktiver oder magnetischer Sensor oder dergleichen, ortsfest am Kuppelkörper, beispielsweise in der Sensoraufnahme, angeordnet, während einer oder mehrere Geber an dem Mitnehmer angeordnet sind. Es ist aber prinzipiell auch möglich, dass beispielsweise ein Sensor am Mitnehmer angeordnet ist, der von einem ortsfest am Kuppelkörper, zum Beispiel in der Sensoraufnahme, angeordneten Geber betätigbar ist. Bei dem Geber handelt es sich beispielsweise um eine Lichtquelle, einen Magneten, oder dergleichen.

Bei dem am Kuppelkörper angeordneten Mitnehmer sind die folgenden Maßnahmen zweckmäßig:
Es ist vorteilhaft, wenn der Mitnehmer, insbesondere der Träger, einen Ring umfasst, der mehrere Ringsegmente aufweist. Der Mitnehmer, z.B. der Träger und/oder das Mitnahmeteil, ist vorteilhaft in Umfangsrichtung mehrteilig, zumindest in einer Radialebene, d.h. dass er in mindestens einer Radialebene oder insgesamt beispielsweise 2 oder mehr Ringsegmente umfasst.

Segmente des Mitnehmers, d.h. des Trägers und/oder des Mitnahmeteils, insbesondere Ringsegmente, können beispielsweise durch einmal verschließbare Verbindungen miteinander verbunden sein, z.B. Tannenbaumschrägen, Clipse oder dergleichen. Beispielsweise ist eine Verbindung der Segmente des Mitnehmers oder Trägers in der Art von Kabelbinder-Verbindungen möglich. Aber auch sonstige Fügemethoden, z.B. Vernieten, Schrauben, Kleben, miteinander Verclipsen oder Verrasten oder dergleichen sind bei Segmenten eines erfindungsgemäßen Mitnehmers ohne Weiteres möglich. Es ist auch möglich, dass Teile eines erfindungsgemäßen Mitnehmers mittels eines Gelenkes und/oder eines Filmscharniers miteinander verbunden sind.

Mitnahmeteilsegmente oder Trägersegmente, z.B. Ringsegmente, eines Mitnehmers gemäß der Erfindung können beispielsweise miteinander verklammert werden. Auch ein Verschrauben oder Verhaken ist ohne weiteres möglich. Es ist auch möglich, dass bei einem mindestens zwei oder mehrere Radiallagen umfassenden Mitnehmer Radiallagen durch Rastverbindungen, Verklammern, Haken oder dergleichen miteinander verbunden sind.

Vorteilhaft ist vorgesehen, dass zwei oder mehr Trägersegmente oder Ringsegmente durch eine Klammer zusammengehalten werden, wobei die Klammer beispielsweise in Umfangsrichtung einen Schlitz oder eine Ausnehmung umfasst. Der Ring bzw. die Klammer erstreckt sich über einen größten Umfang eines durch die Ringsegmente gebildeten Träger-Rings weg. An mindestens einem Ringsegment ist zweckmäßigerweise eine Aufnahme vorhanden, in die die Klammer eingreifen kann.

Der Mitnehmer kann aber auch radial gesehen, d.h. von innen nach außen bzw. umgekehrt, mehrere Schichten oder Komponenten umfassen. Beispielsweise kann eine innere Ebene oder Schicht als Gleitschicht oder Lagerschicht bzw. -ebene ausgestaltet sein, während eine äußere Ebene oder Schicht als Mitnahmeschicht oder -ebene, mithin also als Mitnahmeteil, ausgestaltet ist. Die äußere Schicht oder Komponente oder Lage soll nämlich einen möglichst festen Halt der Zugkupplung am Mitnehmer, möglichst ohne Schlupf, ermöglichen. Die Reibung sollte also entsprechend hoch sein. Innen, im Kontaktbereich mit dem Kuppelkörper, ist jedoch eine geringe Reibung bevorzugt, so dass dort beispielsweise eine Gleitschicht angeordnet ist. Selbstverständlich ist es auch möglich, dass der Mitnehmer ein Rollen- oder Walzenlager umfasst, mit dem er drehbar am Kuppelkörper gelagert ist.

Ein Aufbau des Mitnehmers in Schichten oder in mehreren Lagen ermöglicht es, verschiedene Materialien mit jeweils optimalen Eigenschaften zu kombinieren. So kann beispielsweise eine in Kontakt mit dem Kuppelkörper befindliche Komponente des Mitnehmers vorteilhaft die vorgenannte gute Gleiteigenschaft aufweist.

Eine Schicht oder Komponente des Mitnehmers, die zum Halten oder Aufnehmen eines Sensors oder eines Gebers zum Betätigen des Sensors ausgestaltet ist, insbesondere der Träger, ist vorteilhaft relativ biegesteif. Diese Schicht oder Komponente des Mitnehmers kann mit Vorteil den Sensor oder Geber gut halten und/oder schützen.

Es ist auch möglich, dass der Mitnehmer mehrere Komponenten umfasst, von denen manche Ringsegmente bilden, die vor Ort, d.h. bei der Montage, am Kuppelkörper miteinander verbunden werden, d.h. dass die jeweiligen Ringsegmente relativ biegesteif sein können und so beispielsweise ohne Probleme auch in eine Führungsnut am Kuppelkörper eingesetzt werden können. Andere Komponenten des Mitnehmers, beispielsweise ein zahnriemenartiges Mitnahmeteil, das radial außen angeordnet ist, sind zweckmäßigerweise einstückig. Beispielsweise kann ein ringartiges Mitnahmeteil als Ganzes auf bereits am Kuppelkörper montierte Komponenten des Mitnehmers aufgebracht werden oder beispielsweise auch in diese bereits montierten Komponenten eingebracht werden. So ist beispielsweise ein Träger des Mitnehmers aus zwei oder mehreren Ringsegmenten gebildet, die miteinander verbunden und am Kuppelkörper montiert werden. Auf diesen Träger können dann einer oder mehrere weitere Ringe, die jedoch dehnbar sind, aufgebracht werden.

Vorteilhaft ist es beispielsweise, dass die äußere Komponente, d.h. beispielsweise ein Mitnehmerteil, das von der Zugkupplungsaufnahme beispielsweise formschlüssig oder reibschlüssig mitgenommen werden soll, dehnbar oder aufweitbar ist, so dass es an dem bereits am Kuppelkörper befindlichen Träger montierbar ist, beispielsweise in eine Nut dieses Trägers einsetzbar ist oder am Außenumfang des Trägers befestigbar ist, zum Beispiel anklebbar.

Es versteht sich, dass an bereits am Kuppelkörper montierten oder montierbaren Ringsegmenten oder an mindestens einer anderen, auch einstückigen und ringförmigen Komponente des Mitnehmers eines oder mehrere Mitnahmeteile, die von der zu Kugelkupplung mitgenommen werden können, angeordnet sein können. So können beispielsweise elastische Mitnahmevorsprünge, z.B. Dorne, Zähne oder dergleichen, vor einen an sich relativ biegesteifen Träger vorstehen. Der Träger kann beispielsweise eines oder mehrere Ringsegmente umfassen.

Die Mehrteiligkeit des Mitnehmers ist insbesondere dann zweckmäßig, wenn Komponenten des Mitnehmers relativ biegesteif sind. Aber auch dann, wenn der Mitnehmer und/oder dessen Segmente eine gewisse Elastizität aufweisen, ist das vorgenannte Verbinden von Segmenten ohne Weiteres zweckmäßig.

Bevorzugt ist der Mitnehmer teilweise elastisch verformbar. Beispielsweise ist der Mitnehmer durch die Zugkupplung selbst, insbesondere die Kupplungsaufnahme, eine Schließbacke oder dergleichen der Zugkupplung verformbar. Weiterhin ist es vorteilhaft, wenn der Mitnehmer im Sinne eines Aufweitens für die Montage an dem Kuppelkörper elastisch verformbar ist. Somit kann der Mitnehmer quasi über den Kuppelkörper übergestreift werden.

Es ist auch möglich, dass der Mitnehmer oder ein Mitnahmeteil, das zum Kontakt mit der Zugkupplung vorgesehen ist, wenn er durch die Zugkupplung verformt ist, eine andere Geometrie aufweist, als im unverformten Zustand. Beispielsweise ist das Mitnahmeteil ohne Kraftbeaufschlagung im Wesentlichen kreisringförmig, nimmt jedoch eine ovale oder elliptische Form an, wenn es durch die Zugkupplung, insbesondere deren Schließbacke beaufschlagt ist. Durch die Elastizität ist es beispielsweise möglich, dass der Mitnehmer formschlüssig an der Zugkupplung, insbesondere der Kupplungsaufnahme, anliegt. Aber auch ein kraftschlüssiges oder reibschlüssiges Anliegen ist ohne Weiteres möglich.

Bevorzugt ist eine Lageraufnahme für den Mitnehmer vorhanden, so dass dieser an dem Kuppelkörper geführt und gelagert ist. Bei der Lageraufnahme handelt es sich vorzugsweise um eine Vertiefung, beispielsweise um eine Führungsnut. Besonders bevorzugt ist eine Ringnut.

Die Lageraufnahme ist zweckmäßigerweise an mindestens einem Bereich so tief, dass sie einen Abschnitt des Mitnehmers, der dort von der Lageraufnahme aufgenommen ist, vollständig aufnehmen kann. Somit steht dieser Abschnitt des Mitnehmers nicht vor der Lageraufnahme nach außen vor. Beispielsweise handelt es sich bei diesem Abschnitt um in Fahrtrichtung vordere oder hintere Abschnitt der Lageraufnahme, in die der Mitnehmer quasi vollständig von der Zugkupplung hinein verdrängt werden kann.

Die Lageraufnahme und/oder der Mitnehmer sind vorzugsweise direkt neben dem Äquatorialbereich oder dem maximalen Außenumfang des Kuppelkörpers angeordnet. Beispielsweise ist eine untere oder obere Kante der Lageraufnahme und/oder des Mitnehmers direkt an den Äquatorialbereich oder den maximalen Außenumfang des Kuppelkörpers angrenzend.

Die Sensoraufnahme und die Lageraufnahme gehen zweckmäßigerweise ineinander gegenüber. Beispielsweise schneidet die Lageraufnahme die Sensoraufnahme. Somit wird der Mitnehmer direkt an der Sensoraufnahme vorbeigeführt, so dass er den Sensor in der Sensoraufnahme beeinflussen kann. Es ist aber auch denkbar, dass die Lageraufnahme neben der Sensoraufnahme angeordnet ist und der Mitnehmer dennoch den Sensor beeinflusst, so dass dieser eine Relativposition des Mitnehmers zum Kuppelkörper und somit eine Winkellage der Zugkupplung zur Anhängekupplung, ermitteln kann.

Bevorzugt weist der Mitnehmer außenseitig eine ballige Kontur auf. Die Außenkontur ist dabei diejenige Kontur, die in Kontakt mit der Zugkupplungsaufnahme gelangt. Wenn also beispielsweise ein Bremspad einer Schlingerkupplung an der erfindungsgemäßen Anhängekupplung montiert wird, hat dieser an dem Mitnehmer keine oder jedenfalls nur eine geringe Angriffsfläche, so dass er vertikal über den insbesondere ringförmigen Mitnehmer rutschen kann, ohne ihn abzuscheren.

Es versteht sich, dass zweckmäßigerweise der Mitnehmer mit seiner Außenkontur an die Außenkontur des Kuppelkörpers angepasst ist, auch wenn Mitnahmevorsprünge des Mitnehmers vor den Kuppelkörper vorstehen. Beispielsweise sind die Mitnahmevorsprünge gerundet oder haben einen Schrägverlauf der Art, dass sie nahezu mit der Außenkontur des Kuppelkörpers fluchten, vor diese jedoch zur Drehmitnahme durch die Zugkupplungsaufnahme vorstehen.

Bevorzugt besteht der Mitnehmer oder eine Komponente des Mitnehmers ganz oder im Wesentlichen aus einem thermoplastischen Polyurethan (PU), insbesondere mit vernetzter Struktur (TPUX). Vorteilhaft ist jedenfalls ein elastisches Kunststoffmaterial.

Die Sensoranordnung umfasst zweckmäßigerweise mindestens eine Lichtquelle, deren Licht-Austrittsbereich zum Mitnehmer hin gerichtet ist, so dass durch diesen Licht reflektierbar ist. Ein Licht-Erfassungsbereich des mindestens einen optischen Sensors ist so ausgerichtet, dass er zur Erfassung des reflektierten Lichts geeignet ist.

Die Sensoranordnung weist - unabhängig davon, ob sie einen magnetischen, optischen oder auf einem sonstigen Messprinzip arbeitenden Sensor aufweist - zweckmäßigerweise Signalmittel zur Erzeugung eines eine Winkelstellung des Mitnehmers relativ zu dem Kuppelkörperträger anzeigenden Winkelsignals anhand eines Messsignals auf, das von dem mindestens einen beispielsweise optischen oder magentischen Sensor anhand durch den Mitnehmer erzeugten Signalen, z.B. reflektiertem Licht, Magnetfeldänderungen oder dergleichen, erzeugbar ist.

Die Signalmittel sind zweckmäßigerweise zur Berechnung von Koordinatendaten, beispielsweise Winkel-Koordinatendaten, anhand von Geschwindigkeitsdaten des mindestens einen Sensors ausgestaltet. Der Sensor misst also eine Winkeländerung des Mitnehmers relativ zum Kuppelkörper, um anhand dieses Geschwindigkeitssignals wiederum Winkel-Koordinatendaten zu ermitteln.

Weiterhin ist es vorteilhaft, wenn die Anhängekupplung eine Busschnittstelle oder eine sonstige elektrische Schnittstelle zur Ankopplung an das Bordnetz des Kraftfahrzeugs zur Übertragung des Winkelsignals aufweist. Die Busschnittstelle ist beispielsweise eine CAN-Schnittstelle (Controller Area Network), eine LIN-Schnittstelle (Local Interconnect Network) oder dergleichen.

Der mindestens eine Sensor - es können auch mehrere Sensoren vorgesehen sein - ist vorzugsweise in einer Sensoraufnahme des Kuppelkörpers angeordnet. In der Sensoraufnahme des Kuppelkörpers könnte aber auch ein Geber zur Betätigung eines oder mehrerer in dem Mitnehmer angeordneten Sensoren angeordnet sein. Von der Sensoraufnahme führt beispielsweise ein Anschlusskanal und oder ein Montagekanal beispielsweise zu einer Auswerteeinrichtung zur Auswertung von Sensorsignalen des mindestens einen Sensors. Selbstverständlich könnte auch eine drahtlose Übertragung zwischen Sensor und Auswerteeinrichtung vorgesehen sein. Weiterhin ist es denkbar, dass der Sensor eine Auswerteeinrichtung aufweist und diese beispielsweise mit dem Bordnetz des Kraftfahrzeugs direkt, drahtlos, zum Beispiel über Funk, oder auch leitungsgebunden, kommuniziert.

Bevorzugt ist der Kuppelkörper etwa kugelig oder bildet eine Kugel. Diese Kugel kann oberseitig abgeflacht sein, wie es bei Normkugeln üblich ist. Beispielsweise bildet der Kuppelkörperträger einen Kupplungsarm oder weist einen solchen auf.

Der Kuppelkörper kann einstückig oder mehrteilig sein. Der Kuppelkörper weist beispielsweise ein Unterteil auf rund ein Oberteil, die aneinander montierbar, beispielsweise miteinander verschraubar, verschweißbar oder dergleichen sind. Wenn die beiden Teile (oder mehr Teile) noch nicht miteinander verbunden sind, ist es vorteilhaft möglich, einen oder mehrere Mitnehmer am Kuppelkörper zu montieren.

An dieser Stelle sei bemerkt, dass der Kuppelkörperträger abnehmbar, insbesondere steckbar, oder fest am Kraftfahrzeug montiert sein kann oder auch an einem Lager dergestalt, dass der Kuppelkörperträger zwischen einer Gebrauchsstellung und einer Nichtgebrauchsstellung verstellbar gelagert ist. In der Nichtgebrauchsstellung ist der Kuppelkörperträger bzw. auch der Kuppelkörper beispielsweise unter einer Heckschürze oder einem Heck-Stoßfänger des Kraftfahrzeuges verborgen, jedenfalls gegenüber Sicht im Wesentlichen abgedeckt, so dass eine optisch ansprechende Gestaltung getroffen ist. In der Betriebsstellung hingegen steht der Kuppelkörper nach hinten vor das Kraftfahrzeug vor, beispielsweise nach hinten vor einen Stoßfänger, so dass der Anhänger angehängt werden kann.

Vorzugsweise ist vorgesehen, dass der Mitnehmer oberhalb oder unterhalb des Äquatorialbereichs des Kuppelkörpers angeordnet ist, so dass der maximale Außenumfang des Kuppelkörpers in dem Äquatorialbereich zum Halten der Zugkupplungsaufnahme bereit steht.

Es können auch 2 oder mehrere Mitnehmer vorgesehen sein. Beispielsweise ist ein Mitnehmer oberhalb, ein anderer Mitnehmer unterhalb der Äquatorlinie des Kuppelkörpers angeordnet.

Ein Grundgedanke ist es dabei, dass die Anhängekupplung im Bereich ihres größten Umfanges, bei einer Normkugelkupplung beispielsweise 50 mm, nicht durch den Mitnehmer geschwächt ist. Somit kann ein so genannter Abhebetest, bei dem die zu Kugelkupplung von dem Kuppelkörper mit einer vorbestimmten Kraft abgezogen wird, was beispielsweise beim Fahrbetrieb des Gespanns aus Zugfahrzeug und Anhänger beim überfahren von Bodenwellen auftreten kann. In der Norm ECE-R 55 ist diese Kraft beispielsweise unter Absatz 3.2.3 definiert. Gerade dort ist also der Kuppelkörper, insbesondere die Kupplungskugel, nicht geschwächt, so dass die Zugkupplungsaufnahme im Bereich des maximalen Umfangs des Kuppelkörpers an diesem eingreifen kann. Dennoch ist es möglich, dass der Mitnehmer von der Zugkupplung mitgenommen wird, so dass die Drehwinkelauffassung möglich ist.

Ein normgerechtes Verhalten bzw. eine normgerechte Belastbarkeit der Anhängekupplung ist bereits dann erzielt, wenn eine horizontale Ausrichtung von Anhängekupplung und Anhänger gegeben ist, d.h. dass der Mitnehmer oberhalb oder unterhalb der Äquatorialebene des Kuppelkörpers angeordnet ist. Die Äquatoriallinie ist dabei diejenige Ebene, die bei horizontal stehenden Fahrzeug oder Kuppelkörper horizontal verläuft.

Bevorzugt ist es jedoch, dass auch bei einer Schrägstellung des Anhängers relativ zum Zugfahrzeug noch ein maximaler Umfang des Kuppelkörpers zur Verfügung steht, an dem die Kupplung des Anhängers angreifen kann. es ist bevorzugt, dass der Äquatorialbereich, außerhalb dessen der Mitnehmer angeordnet ist, derart breit ist (man könnte auch sagen hoch ist), dass beispielsweise bei einer Schrägstellung der Zugkupplung zum Kuppelkörper bzw. auch zum Zugfahrzeug (je nachdem, was man betrachtet) um 10-15°, vorzugsweise 15-20° oder auch 10-25° Grad die Zugkupplungsaufnahme immer noch im Bereich eines maximalen Außenumfangs des Kuppelkörpers an demselben angreift.

Besonders bevorzugt ist es, wenn der Mitnehmer oberhalb einer Ebene oder im Bereich einer Ebene angeordnet ist, die etwa mittig zwischen der Oberseite des Kuppelkörpers und der Äquatorialebene verläuft.

Eine weitere vorteilhafte Maßnahme kann vorsehen, dass die Oberseite des Kuppelkörpers, zum Beispiel der Kupplungskugel, zum Tragen der Zugkupplungsaufnahme bereit steht, d.h. dass dort an der Oberseite oder an oberen Stirnseite bzw. vorteilhaft einer Flachseite des Kuppelkörpers kein Mitnehmer angeordnet ist.

Bevorzugt ist es auch, wenn eine Oberseite des Kuppelkörpers massiv ist, jedenfalls nicht durch den Mitnehmer geschwächt ist, so dass der Kuppelkörper einen seiner Oberseite eine obere Stützfläche aufweist.

Zum Kupplungsarm sei noch nachgetragen, dass dieser zwar selbstverständlich in einer bevorzugten Ausführungsform eine armartige Gestalt hat. Es ist aber auch möglich, dass unter dem Begriff "Kupplungsarm" ganz allgemein ein Kuppelkörperträger verstanden wird, der eine durchaus massive Bauart aufweisen kann. Mithin ist also der Kupplungsarm nicht auf eine Ausführungsform als Stange oder dergleichen reduziert, sondern kann durchaus massive Gestalt haben.

Wie bereits erwähnt, handelt es sich bei dem Kupplungselement oder dem Kuppelkörper zweckmäßigerweise um eine Kugel. Insbesondere dann ist vorgesehen, dass das erste und/oder das mindestens eine zweite Kupplungselementteil außenseitig zumindest teilweise kugelig sind. Die Kugelgestalt ermöglicht es, dass in an sich bekannter Weise die Kupplung des Anhängers auf dem Kupplungselement in der Art eines Kugelgelenks oder einer Kugelgelenkpfanne gleiten kann.

Nachfolgend wird ein Ausführungsbeispiel der Erfindung anhand der Zeichnung erläutert. Es zeigen:
- Figur 1: eine Querschnittsansicht einer ersten Anhängekupplung gemäß der Erfindung, an die eine Zugkupplung angekuppelt ist,
- Figur 2: eine perspektivische Schrägansicht der ersten Anhängekupplung von hinten oben,
- Figur 3: eine Querschnittsansicht der ersten Anhängekupplung gemäß Figur 2, etwa entlang einer Schnittlinie A-A, die in die in
- Figur 4: von oben dargestellte Anhängekupplung eingezeichnet ist,
- Figur 5: eine Seitenansicht der ersten Anhängekupplung,
- Figur 6: einen Teilschnitt eines Kuppelkörpers der Anhängekupplung gemäß Figur 5 sowie eines schematisch dargestellten Mitnehmers, etwa entlang einer Schnittlinie B-B in Figur 5,
- Figur 7a: den Mitnehmer gemäß Figur 6 von schräg oben, wobei der Mitnehmer teilweise geöffnet ist,
- Figur 7b: den Mitnehmer der zweiten Anhängekupplung gemäß Figur 13,
- Figur 8a: ein Mitnahmeteil des Mitnehmers gemäß Figur 7a,
- Figur 8b: ein Mitnahmeteil des Mitnehmers gemäß Figur 7b,
- Figur 9: einen Sensorgeber-Einsteckkörper für den Mitnehmer gemäß Figur 7a oder 7b,
- Figur 10a: einen Träger des Mitnehmers gemäß Figur 7a von schräg oben, und
- Figur 10b: einen Träger des Mitnehmers gemäß Figur 7c von schräg oben,
- Figur 11: einen Schnitt entlang einer Linie B-B in Figur 13,
- Figur 12: ein Detail B aus Figur 11,
- Figur 13: eine zweite erfindungsgemäße Anhängekupplung mit einem anderen Mitnehmer,
- Figur 14: eine perspektivische Darstellung eines Ringsegments eines Mitnehmers für die Anhängekupplung gemäß Figur 1 oder Figur 13 mit einer in Umfangsrichtung wirksamen Hakenanordnung,
- Figur 15: eine Variante des Mitnehmers gemäß Figur 14, allerdings mit einer stirnseitig wirksamen Hakenanordnung,
- Figur 16: eine Variante des Mitnehmers gemäß Figur 14 mit einer Spreiz-Hakenanordnung,
- Figur 17: eine weitere Variante eines erfindungsgemäßen Mitnehmers, ebenfalls mit Rasthaken,
- Figur 18: eine Variante des Mitnehmers gemäß Figur 1, wobei 2 gleichartige Ringsegmente zur Bildung des gesamten Mitnehmers geeignet sind,
- Figur 19: ein weiteres Ausführungsbeispiel eines Mitnehmers, bei dem gleichartige Ringsegmente mittels Haken miteinander verhakbar sind,
- Figur 20: eine Variante des Mitnehmers gemäß Figur 14, wobei 2 Ringsegmente mit einem Scharnier, insbesondere einem Filmscharnier miteinander verbunden sind,
- Figur 21: einen Mitnehmer mit Steckaufnahmen zum Einstecken und Verrasten von Gebern,
- Figur 22: eine Variante des Mitnehmers gemäß Figur 20, ebenfalls mit Steckaufnahmen,
- Figur 23: eine schematische Draufsicht eines Mitnehmers, bei dem ein zahnriemenartigen Mitnehmerteil mit einem Träger des Mitnehmers verschraubt ist,
- Figur 24: einen Mitnehmer mit einem zahnriemenartigen Mitnehmerteil, dessen Längsenden mit einem in
- Figur 25: in Draufsicht dargestellten Schließglied miteinander verbunden sind.

Nachfolgend werden Anhängekupplungen 10, 110 erläutert, bei denen identische oder ähnliche Komponenten mit denselben Bezugszeichen versehen sind und unterschiedliche Komponenten um 100 voneinander abweichende Bezugsziffern tragen.

Die Anhängekupplung 10 oder 110 ist an einem Kraftfahrzeug 12 befestigt, beispielsweise einem Querträger. An einem Kuppelkörperträger 13 der Anhängekupplung 10, 110 sind hierfür beispielsweise Bohrungen 14 vorgesehen, wobei eine bewegliche Lagerung, insbesondere eine Dreh- und/oder Schiebelagerung, des Kuppelkörperträgers 13 bezüglich des Kraftfahrzeugs 12 auch möglich ist, z.B. anhand einer geeigneten Lagereinrichtung. Der Kuppelkörperträger 13 steht nach hinten vor einen Stoßfänger 11 des Kraftfahrzeuges 12 vor. Der Kuppelkörperträger 13 trägt an seinem freien Ende einen Kuppelkörper 15, der vorliegend eine kugelige Gestalt hat. Dementsprechend kann eine Zugkupplung 16 eines Anhängers 17 mit ihrer Zugkupplungsaufnahme 18 auf den kugeligen Kuppelkörper 15 aufgesetzt werden.

Die Zugkupplung 16 ist an einem freien Ende einer Deichsel 19 des Anhängers 17 angeordnet und mittels eines Schwenkhebels 20 betätigbar. Wenn der an um eine Schwenkachse 24 schwenkbar gelagerte Schwenkhebel 20 in die Schließstellung, das heißt in Richtung der Deichsel 19 bewegt wird, betätigt er in an sich bekannter Weise einen Haltebacken 21 in Richtung einer Kugeloberfläche 23 des Kuppelkörpers 15. Somit liegt also eine Innenfläche 22 der Zugkupplungsaufnahme 18 an der Kugeloberfläche 23 an. Der Kuppelkörper 15 ist zweckmäßigerweise feststehend bezüglich des Kuppelkörperträgers 13, zumindest drehfest, so dass die Zugkupplungsaufnahme 18 an der Kugeloberfläche 23 in bekannter Weise außenseitig entlang gleitet.

Die vorliegende Ausgestaltung des Kuppelkörpers 15 als Kupplungskugel, die bevorzugt ist, ermöglicht die Ankupplung einer üblichen, normgerechten Zugkugelkupplung an die erfindungsgemäße Anhängekupplung 10, 110, vorliegend also der Zugkupplung 16. Diese ist dementsprechend eine Zugkugelkupplung.

Der Kuppelkörper 15 hat an seiner Oberseite eine Abflachung 25. Der Kuppelkörperträger 13 weist einen Halsabschnitt 26 auf, auf dem der Kuppelkörper 15 angeordnet ist. Der Halsabschnitt 26 befindet sich an einem freien Endbereich eines Armabschnitts 27 des Kuppelkörperträgers 13.

Der Armabschnitt 27, der Halsabschnitt 26 und der Kuppelkörper 15 sind zweckmäßigerweise einstückig, so dass insgesamt die Anhängekupplung 10, 110 eine hohe Belastbarkeit aufweist. Es können typische Werkstoffe für Kugelstangen verwendet werden, wobei selbstverständlich auch höherwertige Materialien, z.B. C45, 42CrMo4 oder dergleichen, zwar möglich sind, jedoch nicht unbedingt notwendig. Ferner besteht die Möglichkeit, den Kuppelkörper 15 und den Kuppelkörperträger 13 auch mehrteilig auszuführen, beispielsweise als zwei voneinander an sich zunächst separate, jedoch fest miteinander verbundene Komponenten. Die jeweiligen Bestandteile der Anhängekupplung 10, 110 können beispielsweise miteinander verschweißt, verklebt oder verschraubt sein, wobei die vorliegende einstückige Bauweise bevorzugt ist. Diese einstückige oder fest miteinander zusammengefügte Bauweise der Komponenten der Anhängekupplung 10, 110 bzw. deren Kupplungsarm ist ohne Weiteres realisierbar, auch wenn die nachfolgend beschriebene Sensoranordnung 30 zum Einsatz kommt, mit der Winkelstellungen des Anhängers 17 relativ zur Anhängekupplung 10, 110 und somit zum Kraftfahrzeug 12 ermittelbar sind.

Die Sensoranordnung 30 umfasst einen Sensor 31, beispielsweise einen magnetischen Sensor, der in einer Sensoraufnahme direkt am Kuppelkörper 15 angeordnet ist. Die Sensoraufnahme 32 und somit der Sensor 31 befinden sich in einem äquatorialen Bereich des Kuppelkörpers 15. Der Sensor 31 ist beispielsweise an einer Platine angeordnet, die weitere Komponenten enthalten kann, beispielsweise einen Filter zur Ausfilterung von unplausiblen Spitzenwerten, einen Verstärker zu Verstärkung eines Sensorsignals, das der Sensor 31 erzeugt, oder dergleichen. Selbstverständlich können diese Funktionen auch unmittelbar in den Sensor 31 integriert sein, insbesondere dann, wenn dieser als ein ASIC, ausgebildet ist.

Jedenfalls befindet sich der Sensor 31 vor Ort dort, wo die Winkelmessung tatsächlich stattfinden soll.

Am Kuppelkörper 15, ebenfalls im Bereich der Äquatoriallinie, befindet sich weiterhin ein Mitnehmer 33, 133, der in einer Lageraufnahme 34 des Kuppelkörpers 15 drehbar gelagert ist. Der Mitnehmer 33, 133 ist ringförmig, d.h. er ist als ein Ring ausgestaltet. In dem Mitnehmer 33, 133 sind Magnete 95, also Sensorgeber 93 aufgenommen, deren Magnetfeld den Sensor 31 erregt bzw. beaufschlagt. Ändert sich nunmehr die Winkelposition der Magnete 95 relativ zum Sensor 31, erzeugt dieser ein Winkelsignal, das die Winkelstellung des Mitnehmers 33, 133 relativ zum Sensor 31 repräsentiert. Da der Sensor 31 bezüglich des Kuppelkörpers 15 ortsfest ist, signalisiert und identifiziert das Winkelsignal, das der Sensor 31 erzeugt, zugleich eine Winkelstellung des Mitnehmers 33, 133 relativ zum Kuppelkörper 15.

Die Magnete 95 sind beispielsweise nebeneinander, jedoch zweckmäßigerweise mit einem Abstand 96 zueinander im Mitnehmer 33, 133 aufgenommen. Die Magnete 95 sind beispielsweise in Umfangsrichtung des Mitnehmers 33, 133 nebeneinander angeordnet. Die Magnete 95 haben z.B. in Reihenrichtung eine abwechselnde Polarität, angedeutet mit "N" und "S".

Die Magnete 95 sind Bestandteile eines Einsteckkörpers 90, der mehrere Magnete 95 mit abwechselnder Polarität aufweist. Der Einsteckkörper 90 besteht beispielsweise aus einem magnetisierbaren Kunststoff. Einzelne Segmente 91 des Einsteckkörper 90 haben also eine unterschiedliche, abwechselnde magnetische Polarität. Die Segmente 91 sind durch Verbindungsstege 92 miteinander verbunden.

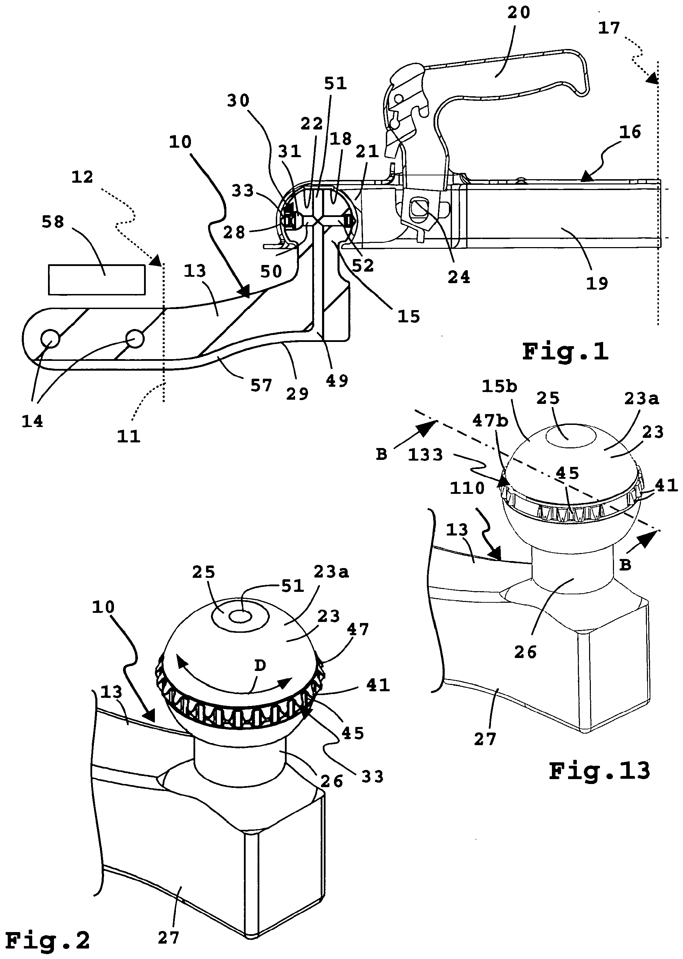

Durch einen Pfeil D wird die Drehbarkeit des Mitnehmers 33, 133 relativ zum Kuppelkörper 15 in Figur 2 angedeutet.

Der Mitnehmer 33, 133 wird nämlich von der Zugkupplung 16 mitgenommen, wenn diese an der Anhängekupplung 10, 110 montiert ist, d.h. der Kuppelkörper 15 im Innenraum der Zugkupplungsaufnahme 18 angeordnet ist. Der Mitnahmeeffekt wird noch verbessert, indem der Haltebacken 21 Druck auf den Mitnehmer 33, 133 ausübt, so dass dieser formschlüssig in der Zugkupplungsaufnahme 18 anliegt, jedoch bezüglich des Kuppelkörpers 15 drehbar ist (Pfeil D). Wenn also nunmehr der Anhänger 17 seine Drehposition oder Drehwinkelstellung relativ zum Kraftfahrzeug 12 bzw. zur Anhängekupplung 10, 110 verändert, nimmt er den Mitnehmer 33, 133 mit. Dadurch ändert eine Relativposition eines Magnetfeldes, das die Magnete 95 erzeugen, relativ zum Sensor 31. Der Sensor 31 kann somit die Winkelstellung des Mitnehmers 33, 133 relativ zum Kuppelkörper 15, entsprechend also auch die Winkelstellung des Anhängers 17 relativ zum Kraftfahrzeug 12, ermitteln.

Die Drehmitnahme des Mitnehmers 33, 133 durch die Zugkupplung 16 wird noch dadurch verbessert, dass dieser durch die Zugkupplung 16, insbesondere deren Haltebacken 21 komprimierbar ist. Wenn der Mitnehmer 33, 133 ohne Kraftbeaufschlagung ist, hat er beispielsweise eine im Wesentlichen kreisrunde Gestalt, zumindest an seinem Innenumfang, der in Kontakt mit dem Kuppelkörper 15 tritt. Bei Beaufschlagung durch die Zugkupplung 16, insbesondere deren Haltebacken 21 und einer diesem gegenüberliegende Wand 28 der Zugkupplungsaufnahme 18, z.B. bei einer radial wirkenden Druckbelastung 39, wird er etwas verformt, so dass er zumindest außen eine ovale oder elliptische Gestalt annimmt.

An einem radialen Außenumfang 40 des Mitnehmers 33, 133 befinden sich Mitnahmevorsprünge 41. Die Mitnahmevorsprünge 41 sind pyramidenförmig ausgestaltet. Jedenfalls ist es bei erfindungsgemäß vorgesehenen Mitnahmevorsprüngen vorteilhaft, wenn sie mindestens eine Schrägfläche aufweisen. Beispielsweise sind Schrägflächen 42 in Umfangsrichtung vorgesehen. Weiterhin sind Schrägflächen 43 vorgesehen, die schräg in Richtung der Stirnseiten 44 des Mitnehmers 33, 133 verlaufen. Die Zugkupplungsaufnahme 18 liegt an den Mitnahmevorsprüngen 41 an, die zweckmäßigerweise zumindest in gewissem Maße komprimierbar bzw. elastisch verformbar sind, so dass sie flächig an der Zugkupplungsaufnahme 18 bzw. deren Innenfläche 22 anliegen. Dadurch wird der Halt bzw. die Drehmitnahme verbessert.

Der Mitnehmer 33, 133 gleitet mit seinem Innenumfang 46 sowie mit seinen Stirnseiten 44 in einer Führungsnut 47 am Kuppelkörper 15. Die Führungsnut 47 ist beispielsweise eine Ringnut. Die Anordnung ist vorteilhaft so getroffen, dass die Stirnseiten 44 ganz oder zumindest im Wesentlichen in der Führungsnut 47 aufgenommen sind, d.h. dass im Wesentlichen nur die Mitnahmevorsprünge 41 vor die Kugeloberfläche 23 und somit eine Außenoberfläche 23a des Kuppelkörpers 15 vorstehen. Weiterhin sind die Schrägflächen 43, die vorliegend einen im Wesentlichen geradlinigen Verlauf haben können, aber auch beispielsweise eine ballige Kontur ausprägen könnten, vorteilhaft insofern, als beispielsweise Bremspads oder sonstige Hindernisse, die bei der Zugkupplung 16 vorhanden sein können, über den Mitnehmer 33, 133 hinweg gleiten können, ohne diesen zu beschädigen.

Es ist vorteilhaft, wenn die Führungsnut 47 den Mitnehmer 33, 133 im Wesentlichen an seinen Stirnseiten 44 führt. Der Innenumfang 46 des Mitnehmers 33, 133 hingegen tritt nicht oder nur abschnittsweise mit dem Nutboden der Führungsnut 47 in Kontakt. Dies ist jedoch optional, d.h. nicht zwingend notwendig. Es ist nämlich auch möglich, dass der Innenumfang 46 im Wesentlichen flächig am Nutboden der Führungsnut 47 anliegt.

Vorteilhaft sind an den Stirnseiten 44 Rillen 45, beispielsweise ringförmige Rillen, vorgesehen, so dass der Berührkontakt zwischen den Stirnseiten 44 und den diesen gegenüberliegenden Flächen der Führungsnut 47 möglichst klein ist.

Weiterhin ist es zwar zweckmäßig, wenn eine Führungsnut im Wesentlichen zueinander winkelige Innenseiten aufweist, insbesondere U-förmige Innenseiten. Es ist aber bei einer erfindungsgemäßen Anhängekupplung auch möglich, dass ein Mitnehmer beispielsweise im Querschnitt U-förmige oder V-förmige Innenkontur oder Führungskontur aufweist, wobei dann die am Kuppelkörper vorhandene Lageraufnahme oder Führungsnut eine korrespondierende Innenkontur aufweist, d.h. ebenfalls eine V-förmige oder U-förmige Kontur.

Der Mitnehmer 33, 133 besteht aus mehreren Komponenten nämlich einem Träger 60, 160, mindestens einem Mitnahmeteil 80 und vorteilhaft mindestens einem Einsteckkörper 90. Der Träger 60, 160 umfasst vorzugsweise aus 2 oder mehr Trägersegmente 61, insbesondere Ringsegmente, oder kann auch einstückig sein, was beim Träger 160 beispielhaft dargestellt ist - wobei auch dieser mehrere (mindestens zwei) Ringsegmente 161 umfassen kann.

Der Träger 60, 160 ist drehbar in der Lageraufnahme 34, z.B. der Führungsnut 47, des Kuppelkörpers 15 aufgenommen. Der Träger 60, 160 besteht aus einem relativ harten Material, beispielsweise hartem Kunststoff, Metall oder dergleichen. Der Träger 60, 160 nimmt den Einsteckkörper 90 auf. Beispielsweise ist für jedes Trägersegment 61 jeweils ein Einsteckkörper 90 mit den Sensorgebern, nämlich den Magneten 95, vorgesehen. Die radial äußere Komponente des Mitnehmers 33, 133 wird von dem Mitnahmeteil 80 gebildet, das lösbar mit dem Träger 60, 160 verbunden ist, so dass es bei Verschleiß ohne Probleme ausgetauscht werden kann.

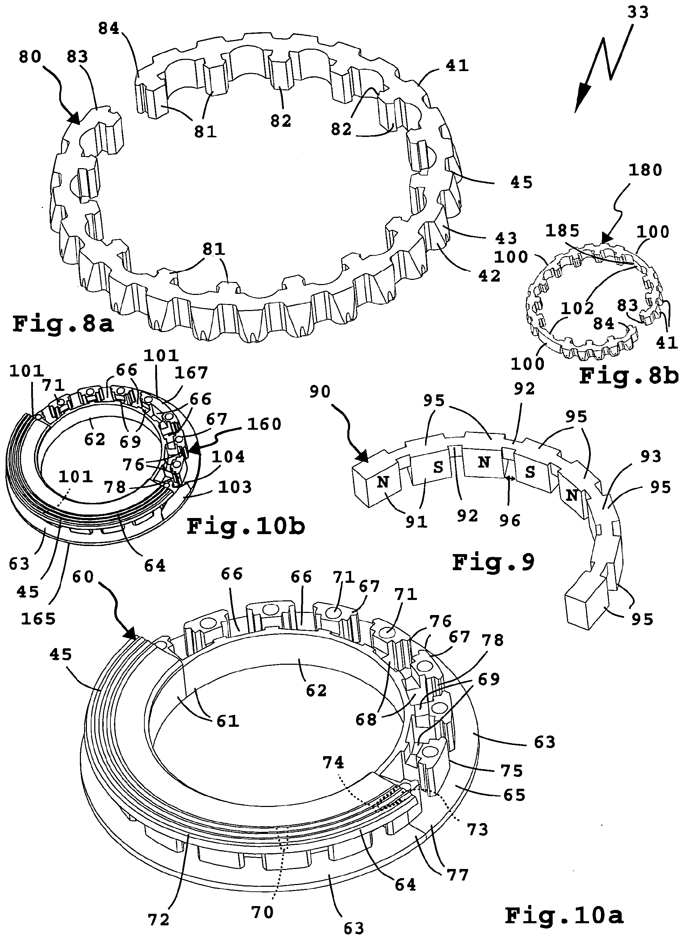

Die Träger 60, 160 weisen jeweils eine innere Umfangswand 62 auf, die dem Nutboden der Führungsnut 47 gegenüberliegt. Den Seitenschenkeln der Führungsnut 47 sind ringförmige Stirnseitenwände 63 und 64 zugeordnet. Die untere Stirnseitenwand 63 ist fest mit der Umfangswand 62 verbunden, was man in Figur 10 beim oberen Trägersegment 61 sehen kann. Die Stirnseitenwand 63 und die Umfangswand 62 bilden ein Trägersegmentteil 65 oder ein Trägerteil 165, wenn der Träger 160 beispielsweise in Umfangsrichtung einstückig ist, also keine Kreisringsegmente aufweist. Die obere Stirnseitenwand 64 ist ein insbesondere lösbar mit dem Trägersegmentteil 65 oder dem Trägerteil 165 verbindbares Bauteil und bildet zweckmäßigerweise einen Deckel 72.

Die Stirnseitenwände 63 und 64 sowie die Umfangswand 62 sind zweckmäßigerweise Lagerwände, die an der Lageraufnahme 34 gelagert sind und dafür sorgen, dass das Mitnahmeteil 80 nicht in Berührkontakt mit der Lageraufnahme 34 bzw. dem Kuppelkörper 15 gelangen.

Radial außen bezüglich der Umfangswand 62 stehen Halteteile 67 säulenartig nach oben vor die Stirnseitenwand 63 vor. Die Halteteile 67 sind in Umfangsrichtung zueinander beabstandet und begrenzen jeweils eine Sensorteilaufnahme 66, in die ein Segment 91 des Einsteckkörpers 90 passt. Die Halteteile 67 sind beispielsweise einstückig mit der unteren Stirnseitenwand 63. Zwischen den Halteteilen 67 und der Umfangswand 62 sind zweckmäßigerweise Stege 68 vorgesehen. Die Stege 68 sind allerdings nicht so hoch wie die Halteteile 67, die sich zwischen den Stirnseitenwänden 63 und 64 erstrecken, sondern haben eine Vertiefung 69 zur Aufnahme der Verbindungsstege 92 des Einsteckkörpers 90. Die Vertiefung 69 bildet also einen sich in Umfangsrichtung erstreckenden Durchgangskanal von der einen Sensorteilaufnahme 66 zur nächsten Sensorteilaufnahme 66.

Der Einsteckkörper 90 kann also von oben her in die Sensorteilaufnahme 66 bzw. die Vertiefungen 69 eingesteckt werden. Sodann wird die als Deckel 72 ausgestaltete und dienende Stirnseitenwand 64 von oben her montiert, z.B. angeklebt und/oder aufgesteckt.

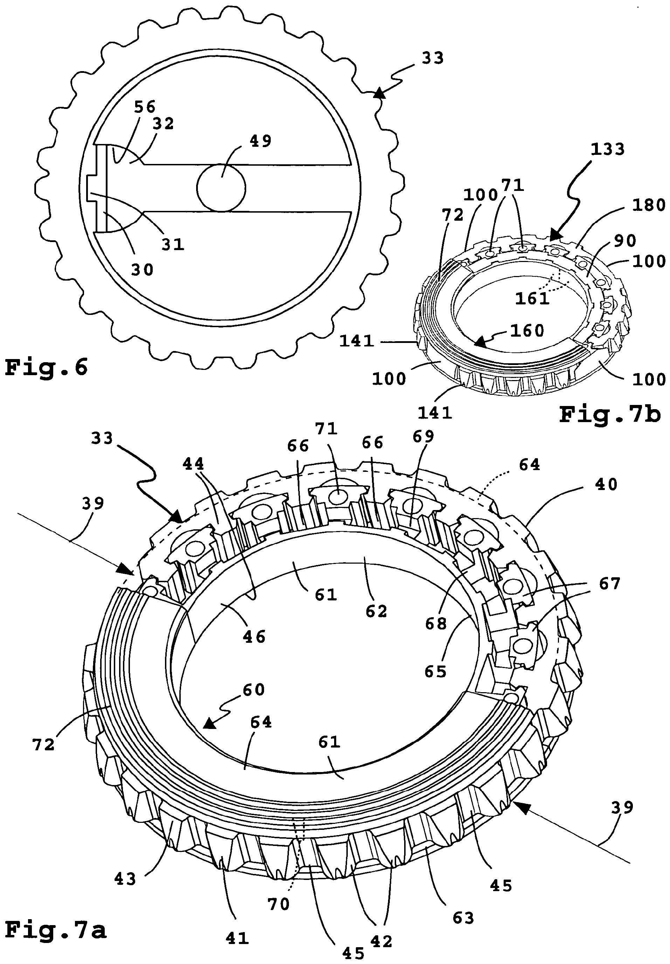

Jedem Trägersegment 61 ist eine separate Deckel-Stirnseitenwand 64 zugeordnet, wobei auch weitere Deckel oder ein einziger Deckel für beide Stirnseitenwände 64 möglich wäre. Die in Figur 7 rechte Stirnseitenwand 64 ist durch eine gestrichelte Linie angedeutet.

An der der gegenüberliegenden Stirnseitenwand 63 zugewandten Unterseite hat die Stirnseitenwand 64 einen oder mehrere Rastvorsprünge 70, beispielsweise pilzförmige Vorsprünge, die in Rastaufnahmen oder Steckaufnahmen 71 an den oberen Stirnseiten der Halteteile 67 eingesteckt werden und dort sicher halten. Selbstverständlich ist auch eine Klebeverbindung anstelle oder in Ergänzung der Rastverbindung ohne weiteres möglich.

Die beiden Trägersegmente 61 sind zweckmäßigerweise an ihren Stirnseiten durch weitere Verbindungselemente verbunden, beispielsweise einen Rastvorsprung oder Hakenvorsprung 73, der in eine korrespondierende Rastaufnahme oder Hakenaufnahme 74 am gegenüberliegenden Trägersegment 61 einrastet oder einhakt.

Sodann ist nur noch das Mitnahmeteil 80 oder 180 zu montieren. Das Mitnahmeteil 80, 180 hat an seinem radialen Außenumfang die Mitnahmevorsprünge 41. Das Mitnahmeteil 80, 180 ist kompressibel und gibt z.B. bei einer radial wirkenden Druckbelastung 39 nach.

An radialen Innenumfang des Mitnahmeteils 80, 180 sind Rasthaken 81 vorhanden, die zwischen die Halteteile 67 eingehakt oder eingerastet werden. Im Bereich ihrer radialen Außenseiten 75 haben die Halteteile 67 sich in Umfangsrichtung erstreckende Hakenvorsprünge 76. Mithin sind also die Halteteile 67 radial außen breiter als radial innen und begrenzten Hakenaufnahmen 78. Dazu passend haben die Rasthaken 81 sich in Umfangsrichtung erstreckende Hakenvorsprünge 82, die zum Hintergreifen der Hakenvorsprünge 76 des Trägers 60, 160 ausgestaltet sind. Somit ist ein sehr fester Halt des Mitnahmeteils 80, 180 am Träger 60, 160 möglich. Gleichwohl kann das Mitnahmeteil 80, 180 leicht entfernt werden.

Besonders vorteilhaft ist es dabei, dass das Mitnahmeteil 80, 180 ein lang gestrecktes Bauteil ist, das quasi zu einem Ring geformt und am Träger 60, 160 befestigt werden kann. Das Mitnahmeteil 80, 180 ist zweckmäßigerweise so am Träger 60, 160 befestigt, dass es die Trägersegmente 61 noch zusätzlich miteinander verbindet, beispielsweise wenn es sich über die einander zugewandten Umfangsenden 77 der Trägersegmente 61 hinweg erstreckt.

Beispielsweise wird das Mitnahmeteil 80, 180 mit seinem einen Längsende 83 bzw. dem dort befindlichen Rastvorsprung oder Rasthaken 81 in die korrespondierende Hakenaufnahme 74 am Träger 60, 160 eingerastet oder eingehakt und dann beispielsweise durch Fingerdruck vollständig auf den Träger 60, 160 aufgebracht, wobei dann nacheinander die Rasthaken 81 in die Hakenaufnahmen 74 einhaken, bis schließlich das Mitnahmeteil 80, 180 vollständig bis zum anderen Längsende 84 hin am Träger 60, 160 montiert ist.

Das Mitnahmeteil 180 weist im Unterschied zum Mitnahmeteil 80 in Drehwinkel abstehenden, beispielsweise von 90°, Mitnahmevertiefungen 100 auf. Die Mitnahmevertiefungen 100 dienen zur Aufnahme des Haltebacken 21 der Zugkupplung 16, so dass eine besonders günstige Drehmitnahme möglich ist. Es versteht sich, dass eine Mitnahmevertiefung 100 ausreicht. Mehrere Mitnahmevertiefungen 100 jedoch erhöhen sozusagen die Wahrscheinlichkeit, dass die Haltebacke 21 sozusagen eine geeignete Mitnahmevertiefung 100 findet, wenn die Zugkupplung 16 an der Anhängekupplung 110 angebracht wird. Der Bediener muss eventuell den Mitnehmer 133 vor der Montage der Zugkupplung 16 noch ein wenig verdrehen, zum Beispiel um etwa maximal 90°, so dass die Haltebacke 21 eine geeignete Mitnahmevertiefung 100 findet.

Die Mitnahmevertiefungen 100 sind an ihren Übergangsbereichen bzw. Randbereichen zu benachbarten Mitnahmevorsprüngen 41 vorzugsweise verstärkt, haben also beispielsweise ein Material mit einer härteren Komponente oder haben eine Verstärkung, zum Beispiel aus Metall oder einem sonstigen festen Material. Diese Maßnahme ist vorteilhaft und verhindert, dass die Innen-Flanken der Mitnahmevertiefungen 100 durch die Außenkanten des Haltebackens 21 nicht beschädigt werden. Beispielsweise sind Mitnahmevorsprünge 141 vorgesehen, die ein gegenüber den Mitnahmevorsprüngen 41 härteres Material aufweisen.

Das Vorsehen der Mitnahmevertiefungen 100 und/oder die Ausgestaltung mit Verstärkungen an Randbereichen der Mitnahmevertiefungen 100 stellen optionale Maßnahmen dar, die selbstverständlich auch bei einem Mitnehmer zweckmäßig sind, der kein lösbares Mitnahmeteil aufweist.

Damit das Mitnahmeteil 180 drehwinkelrichtig am Träger 160 montierbar ist, sind vorzugsweise Drehwinkelkodierungen 101, 102 am Träger 160 und am Mitnahmeteil 180 vorgesehen. Die Drehwinkelkodierungen 100 werden beispielsweise durch ein breiteres Halteteil 167 gebildet, das gegenüber den Halteteilen 67 jedenfalls in Umfangsrichtung breiter ist. Dazu passend sind am Mitnahmeteil 180 als Drehwinkelkodierungen 102 Aussparungen 185 zum Eingriff der Halteteile 167 vorgesehen. Es versteht sich, dass Drehwinkel-Kodierungen auch anderweitig realisierbar ist, d.h. dass beispielsweise ein Rasthaken (nicht dargestellt) etwas breiter ist als die übrigen Rasthaken 81, dass ein alternativer Kodierungsvorsprung am Mitnahmeteil vorhanden ist oder dergleichen.

Eine weitere vorteilhafte Maßnahme sieht vor, dass die Längsenden 83 und 84 des Mitnahmeteils 180 in Aufnahmen 103 am Träger 160 einsteckbar sind, so dass die Längsenden 83 und 84 vollständig in den Aufnahmen 103 aufgenommen sind. Eine radial äußere Wand 104 einer jeweiligen Aufnahme 103 deckt sozusagen das Längsende 83 oder 84 ab. Dadurch wird effektiv verhindert, dass das Mitnahmeteil 180 sich vom Träger 160 ablöst, wenn die Anhängekupplung 110 genutzt wird. Bevorzugt weist eine jeweilige Aufnahme 103 noch eine Hakenaufnahme 78 auf oder ist neben einer solchen Hakenaufnahme 78 angeordnet, so dass das jeweilige Längsende 83 oder 84 in der Aufnahme 103 auch noch verhakbar ist.

Die Wand 104 ist gegenüber den Mitnahmevorsprüngen 41 radial nach innen zurück versetzt, so dass sie eine weitere Mitnahmevertiefung 100 für den Haltebacken 21 bildet.

Nicht nur die Montage des Mitnehmers 33, 133, sondern auch die Montage der Sensoranordnung 30 selbst gelingt äußerst einfach:
Die Sensorteilaufnahme 32 kommuniziert mit einem Anschlusskanal 48. Der Anschlusskanal 48 hat zueinander winkelige erste und zweite Anschlusskanalabschnitte 49, 50. Der erste Anschlusskanalabschnitt 49 führt von einer Unterseite 29 des Kuppelkörperträgers 13 bis in einen mittleren, zentralen Bereich des Kuppelkörpers 15. Dort ist er mit dem zweiten Anschlusskanalabschnitt 50 verbunden, der seinerseits bis zur Sensorteilaufnahme 32 führt. Der erste Anschlusskanalabschnitt 49 ist mit einem ersten Montagekanal 51 verbunden. Der zweite Anschlusskanalabschnitt 50 ist mit einem zweiten Montagekanal 52 verbunden. Der erste Montagekanal 51 und der erste Anschlusskanalabschnitt 49 bilden insgesamt einen ersten Durchgangskanal 53. Ein zweiter Durchgangskanal 54 wird vom Anschlusskanalabschnitt 50 und vom zweiten Montagekanal 52 gebildet. Der erste Montagekanal 51 bzw. der erste Durchgangskanal 53 erstrecken sich von der Oberseite des Kuppelkörpers 15, d.h. von der Abflachung 25, durch den Kuppelkörper 15, den Halsabschnitt 26 und den vorderen, freien Endbereich des Armabschnitts 27 hindurch bis zur Unterseite 29. Der erste Durchgangskanal 53 verläuft also in einer insbesondere zentralen Vertikalebene der Anhängekupplung 10, 110 bzw. des Kuppelkörpers 15.

Der Sensor 31 kann beispielsweise von vorn, d.h. von der Lageraufnahme 34 her, in die Sensorteilaufnahme 32 eingesetzt werden. Die Verbindungsleitung 55 wird sodann durch die Anschlusskanalabschnitte 49, 50 hindurch bis zur Unterseite 29 geführt. Mit Pfeilen M1 und M2 sind mögliche Montagebedienungen angedeutet.

Die Sensorteilaufnahme 32 ist zur Außenseite des Kuppelkörpers 15 hin, vorliegend also zur Führungsnut 47 hin, etwas aufgeweitet, z.B. trichter- oder trompetenförmig. Beispielsweise hat sie einen langgestreckten Innenraum, so dass zwischen dem Sensor 31 und einer Innenwand 56 der Sensorteilaufnahme 32 ein Abstand vorhanden ist.

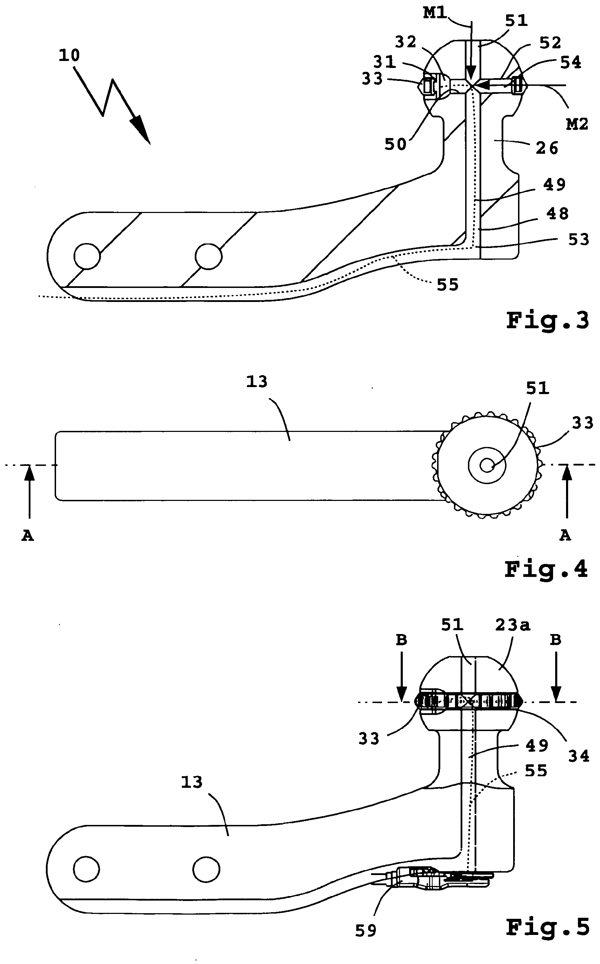

Die Verbindungsleitung 55 ist beispielsweise durch einen Kanal 57, der offen oder geschlossen sein kann, an der Unterseite 29 des Kuppelkörperträgers 13 entlanggeführt, um eine zweckmäßigerweise ortsfest am Kraftfahrzeug 12 angeordnete, vorteilhaft einen Bestandteil der Anhängekupplung 10, 110 bildenden Auswerteeinrichtung 58 zu verbinden. Es versteht sich, dass eine Auswerteeinrichtung auch direkt an der Kugelstange angeordnet sein kann. Exemplarisch ist ein Modul 59 in Figur 5 eingezeichnet, das an der Unterseite 29 montierbar oder montiert ist.

Die Auswerteeinrichtung 58 und/oder das Modul 59 sind vorzugsweise dazu ausgestaltet, vom Sensor 31 erzeugte Signale auszuwerten und insbesondere in relative Winkelsignale umzuwandeln, die dann von einer Fahrzeugelektrik des Kraftfahrzeuges 12 ausgewertet werden können. Die Auswerteeinrichtung 58 und/oder das Modul 59 weisen hierzu zweckmäßigerweise eine Bus-Schnittstelle, insbesondere eine CAN-Bus-Schnittstelle, eine LIN-Bus-Schnittstelle oder dergleichen, auf.

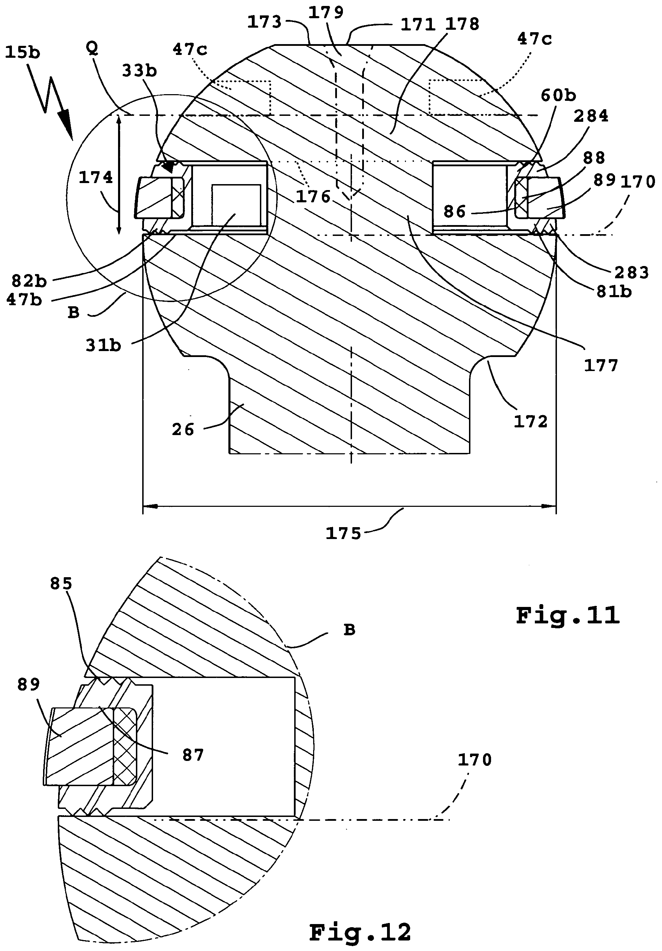

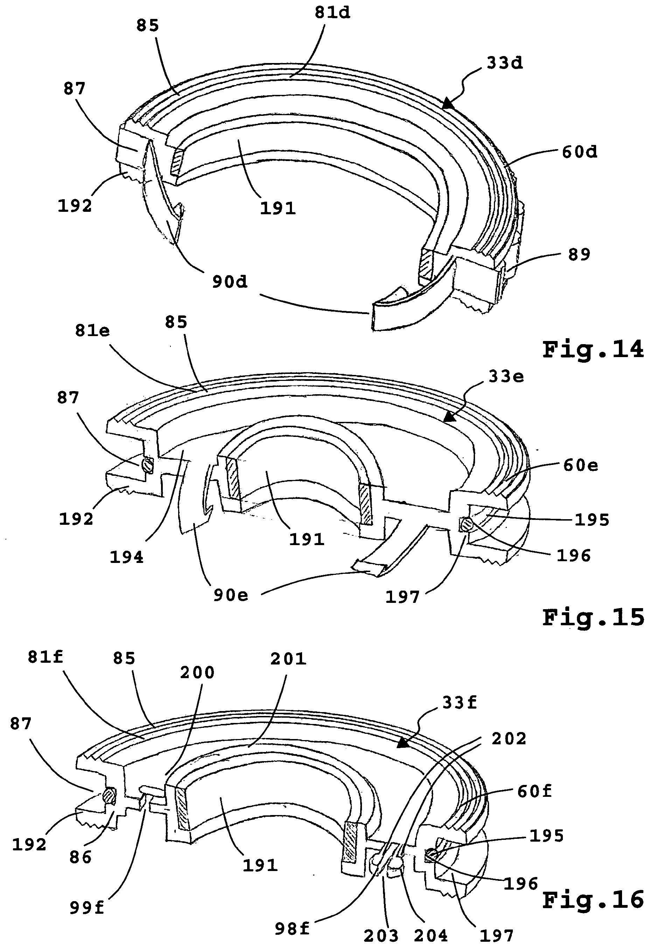

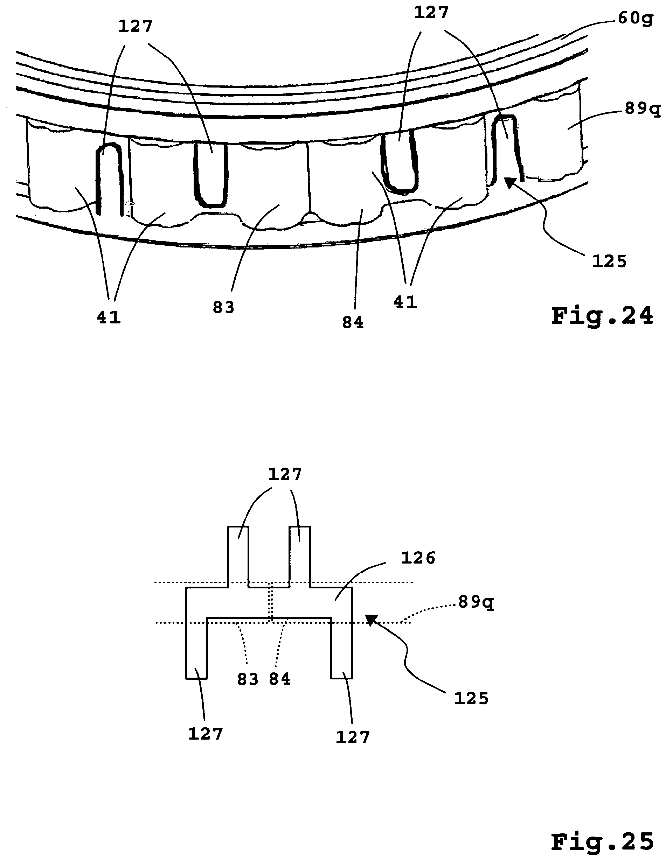

Eine in Figur 11 und 12 dargestellte Anhängekupplung 10b entspricht im Wesentlichen der Anhängekupplung 10 oder 110, hat jedoch einen anderen Kuppelkörper 15b sowie einen alternativ ausgestalteten Mitnehmer 33b. Anstelle des Mitnehmers 33b kann wie in Figur 13 dargestellt auch der Mitnehmer 133 oder einer der Mitnehmer gemäß der Figuren 14 bis 25 verwendet werden.

Der Mitnehmer 33b ist oberhalb einer Äquatorialebene 170 des Kuppelkörpers 15b angeordnet. Die Äquatorialebene 170 ist zugleich der Bereich des größten Außenumfangs 175 des Kuppelkörpers 15b zwischen seiner Oberseite 171 und seiner mit dem Kuppelkörperträger 13 bzw. dem Halsabschnitt 26 verbundenen Unterseite 172. An der Oberseite 171 ist eine Stützfläche 173 vorhanden, d.h. der Kuppelkörper 15b ist sowohl in seinem sich an oder unterhalb der Äquatorialebene 170 erstreckenden Äquatorialbereich als auch an seiner Oberseite 171 massiv, so dass er die Zugkupplungsaufnahme 18 jedenfalls in einem Bereich unterhalb der Äquatorialebene 170 stützen kann. Dies ist wesentlich für einen so genannten Abzugstest oder Hebetest, bei dem geprüft wird, ob die Zugkupplungsaufnahme 18 am Kuppelkörper 15b hält, wenn eine Kraft nach oben auf die Zugkupplung 16 wirkt.

Eine untere Wand einer Führungsnut 47b, in der der Mitnehmer 33b aufgenommen ist, verläuft knapp oberhalb der Äquatorialebene 170.

Es ist jedoch vorteilhaft, wenn eine Führungsnut noch weiter oben, d.h. weiter weg von der Äquatorialebene 170 an einem Kuppelkörper einer erfindungsgemäßen Anhängekupplung angeordnet ist.

So kann z.B. eine Führungsnut 47c vorgesehen sein, die im Bereich einer Quermittelebene Q zwischen der Oberseite 171 und der Äquatorialebene 170 verläuft. Somit steht auch bei dieser Ausführungsform an der Oberseite 171 eine Stützfläche 173 bereit. Allerdings ist der Äquatorialbereich 174, d.h. der massive Teil des Kuppelkörpers 15b breiter. Dann kann die beispielsweise um eine Schrägneigung von 10°, besonders bevorzugt 15° oder auch 20°, insbesondere sogar 25° schräg zum Kuppelkörper 15b stehende Zugkupplungsaufnahme 18 am massiven Äquatorialbereich 174 des Kuppelkörpers 15b angreifen und findet dort festen Halt, kann also nicht vom Kuppelkörper 15b abgezogen werden.

An dieser Stelle sei bemerkt, dass der Kuppelkörper 15, 15b einstückig sein oder selbstverständlich aber auch mehrteilig sein kann, z.B. ein Unterteil 177 und ein Oberteil 178 aufweisen kann (angedeutet durch eine Trennlinie 176, was beispielsweise die Montage der Anhängekupplung 10b oder 110 erleichtert. Das Oberteil 178 ist beispielsweise an das Unterteil 177 angeklebt, mit diesem mittels z.B. einer Schraube 179 verschraubt oder dergleichen.

Es versteht sich, dass der Begriff "Führungsnut" allgemein als eine Lageraufnahme zum Lagern eines Mitnehmers zu verstehen ist. Möglich ist beispielsweise, dass die Führungsnut 47c einen anderen als einen U-förmigen Querschnitt, z.B. v-förmigen Querschnitt aufweist.

Der Mitnehmer 33b ist mehrteilig aufgebaut. Er umfasst einen Träger 60b, der in der Führungsnut 47b oder 47c anordenbar ist. Der Träger 60b bildet insgesamt einen Ring, ist jedoch aus mehreren, zum Beispiel 2, Ringsegmenten 81b, 82b zusammengesetzt. Dies erleichtert insbesondere die Montage des Trägers 60b in der Führungsnut 47b, 47c. Der Träger 60b könnte auch mehr Segmente haben oder einstückig sein.

Der Träger 60b hat an seinen den Seitenwänden der Führungsnut 47b zugeordneten Seitenwänden 283, 284 Rippen oder Gleitvorsprünge 285, die an den Seitenwänden der Führungsnut 47b entlang gleiten und die Reibung verringern. Die Rippen oder Gleitvorsprünge 285 sind zweckmäßigerweise ringförmig. Vorzugsweise sind mehrere zueinander konzentrische Gleitvorsprünge bei einem erfindungsgemäßen Mitnehmer vorgesehen. Es versteht sich, dass diese Gleitvorsprünge - es kann auch nur ein solcher vorgesehen sein - nicht nur an einem Träger wie beim Mitnehmer 33b vorgesehen sein können, sondern auch an einer sonstigen Komponente eines erfindungsgemäß ausgestalteten Mitnahmeteils.

Radial innen hat ein Träger 60b des Mitnehmers 33b eine Umfangswand 86. Von den Seitenwänden 283, 284 und der Umfangswand 86 ist eine Aufnahme 87 begrenzt. Die Aufnahme 87 dient zum Halten und Aufnehmen einer Kompressionslage 88 und eines Mitnahmeteils 89. Die Kompressionslage 88 wird beispielsweise von einer Polyurethan-Schicht oder einem Polyurethan-Ring gebildet, der am Boden der Aufnahme 87 angeordnet ist. Die Kompressionslage 88 ist nachgiebig. Somit kann das Mitnahmeteil 89 nach radial innen in die Aufnahme 87 hinein verstellt werden, d.h. dass die Kompressionslage 88 dann nachgibt. Das Mitnahmeteil 89 selbst kann verhältnismäßig steif und/oder abriebfest sein. Die Nachgiebigkeit bei Einwirkung eines Drucks durch die Zugkupplungsaufnahme 18 wird quasi von der Kompressionslage 88 bereitgestellt.

Das Mitnahmeteil 89 ist zweckmäßigerweise von einem zahnriemenartigen Ring gebildet, der gedehnt werden kann, um am Träger 60b befestigt zu werden, wenn der Träger 60b bereits fertig montiert ist. Das Mitnahmeteil 89 steht nach radial außen vor den Träger 60b vor, so dass der für eine Drehmitnahme durch die Zugkupplungsaufnahme 18 bereitsteht.

In der Zeichnung ist die Kompressionslage 88 verhältnismäßig dünn im Vergleich zum Mitnahmeteil 89 dargestellt. Es versteht sich, dass die Kompressionslage 88 zweckmäßigerweise eine wesentlich größere Stärke oder Dicke aufweisen kann, so dass sie besonders nachgiebig ist. Gerade dadurch ist es möglich, dass das Mitnahmeteil 89 relativ stark verformt wird, um sich an eine Innenkontur der Zugkupplungsaufnahme 18 anzupassen und somit von dieser möglichst ohne Schlupf und Abrieb mitgenommen werden kann.

In den Figuren 14-22 sind verschiedene Ausgestaltungen von Trägern bzw. Ringsegmenten von Trägern erfindungsgemäßer Mitnehmer dargestellt, bei denen unterschiedliche Verbindungstechniken zum Einsatz kommen, mit denen die Ringsegmente miteinander verbunden oder verbindbar sind. Gleiche oder gleichartige Komponenten sind bei diesen weiteren Ausführungsbeispielen mit den bereits bekannten Bezugszeichen versehen.

Ein Ringsegment 81d eines Trägers 60d eines Mitnehmers 33d weist beispielsweise vor seine Längsenden vorstehende Haken 90d auf, die in Hakenaufnahmen oder Widerlager eines in der Zeichnung nicht dargestellten, komplementären Ringsegments einhakbar sind. Am Innenumfang des Trägers 60d ist ein Geber-Ring 191 vorgesehen, der beispielsweise Magnet ist oder nicht dargestellte Einzelmagnete aufweist. Die Haken 90d stehen vor Stirnseiten 192 der Längsenden des Ringsegments 81d vor.

Bei einem Ringsegment 81e eines Trägers 60e eines Mitnehmers 33e sind Haken 90e vorgesehen, die ebenfalls in Aufnahmen eines komplementären, nicht dargestellten Ringsegments des Trägers 60e eingreifen können. Im Unterschied zum Ringsegment 81d sind jedoch die Haken 90e nicht in Umfangsrichtung des Ringsegments 81e verlaufend, sondern stehen vor obere und/oder untere Stirnseiten 194 des Ringsegments 81e vor. Dabei ist es vorteilhaft, wenn einer der Haken 90e an einer oberen Stirnseite 194, der andere Haken 90e an einer unteren Stirnseite 194 angeordnet ist, so dass die Haken 90e voneinander entgegengesetzten Seiten her in Aufnahmen an dem nicht dargestellten weiteren Ringsegment des Mitnehmers 33e eingreifen.

Als zusätzliche Sicherung bzw. als verbesserter Halt des Ringsegments 81e am anderen Ringsegment dient eine Klammer 195, die vorliegend als Sprengring 196 ausgestaltet ist. Die Klammer 195 umgreift beide Ringsegmente jedenfalls soweit, dass ein größter Umfang des Mitnehmers 33e geklammert ist. Vorzugsweise ist an den Ringsegmenten des Mitnehmers 33e eine Aufnahme 197, beispielsweise eine Vertiefung am Boden der Aufnahme 87, vorgesehen.

Bei einem Mitnehmer 33f sind dessen Ringsegmente 81f gleichartig ausgestaltet, d.h. es ist ein Gleichteilprinzip realisiert. Zur Verbindung der Ringsegmente 81f dienen Rastvorsprünge 98f, die in korrespondierende Rastaufnahmen 99f am jeweils anderen Ringsegment 81f einrasten können. Die Rastvorsprünge 98f und die Rastaufnahmen 99f sind an den jeweiligen Längsend-Stirnseiten 192 vorgesehen. Die Rastvorsprünge 98f und die Rastaufnahmen 99f sind beispielsweise an einer Wand 200 angeordnet, die sich zwischen der Umfangswand 86 und einer Stützwand 201 zum Abstützen des Geber-Rings 191 befindet. Ein jeweiliger Rastvorsprung 98f umfasst beispielsweise 2 Rastarme 202, die flexibel sind und zwischen denen ein Abstand 203 vorhanden ist, so dass sie zueinander hin federn können. Damit ist es möglich, dass Haltevorsprünge 204 außer Eingriff mit einer korrespondierenden Ausnehmungen der Rastaufnahme 99f gelangen können.

Ein Mitnehmer 33g entspricht im Wesentlichen dem Mitnehmer 33f, wobei an seinen Ringsegmenten 81g etwas modifizierte Rastvorsprünge 98g vorhanden sind. Dessen Rastarme 202 sind zwar ebenfalls mit einem Abstand 203 voneinander beanstandet, sind jedoch stirnseitig durch ein Verbindungselement 105 miteinander verbunden. Dennoch können die beiden Rastarme 202 zueinander hin federn, um in Rastaufnahmen 99g am jeweils anderen Ringsegment 81g einzurasten. Dort sind Vertiefungen für die Haltevorsprünge 204 vorhanden. Beispielsweise sind die Rastaufnahmen 99g an einer Wand 200 angeordnet, die von der Umfangswand 86 nach radial innen absteht.

Ein Mitnehmer 33h entspricht im Wesentlichen dem Mitnehmer 33d, wobei jedoch Ringsegmente 81h des Mitnehmers 33h einem Gleichteilprinzip folgen. Es können also 2 Ringsegmente 81h zu einem Gesamtring miteinander verbunden werden. Ein den Haken 90d entsprechender Haken 90h kann in eine Hakenaufnahme 106 am jeweils anderen Ringsegment 81h eingehakt werden. Der Haken 90h ist also ein in Umfangsrichtung verlaufender Haken. Sein Hakenvorsprung steht nach radial innen vor, so dass er in die beispielsweise im Bodenbereich der Aufnahme 87 für den Sprengring 196 oder der Aufnahme 87 für das Mitnahmeteil 89 angeordnete Hakenaufnahme 106 einhaken kann. Wenn beispielsweise der Sprengring 196 oder das Mitnahmeteil 89, 89p, am Träger 60h montiert sind, drücken sie den Haken 90h in die Hakenaufnahme 106 oder sichern den Haken 90h in der Hakenaufnahme 106.

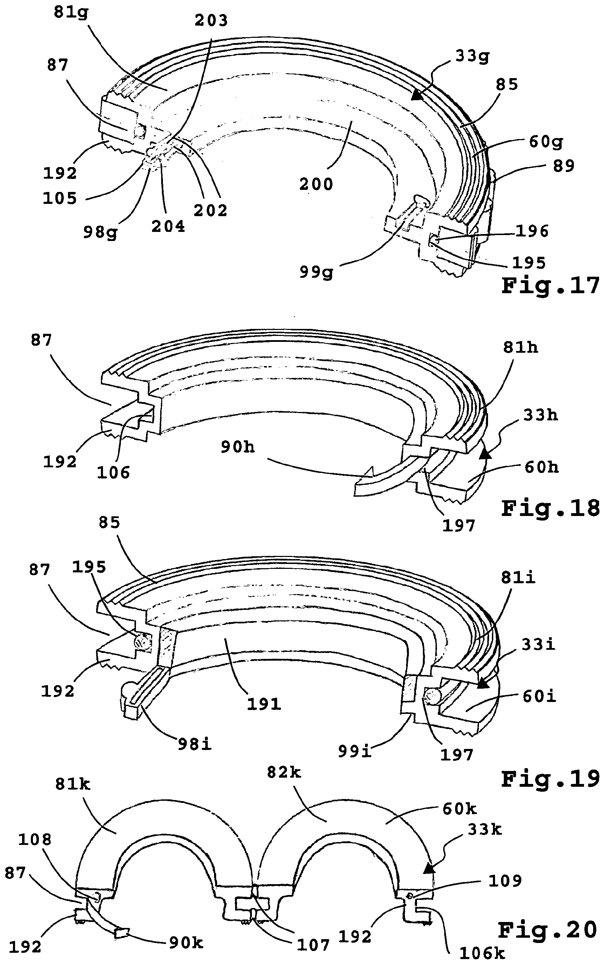

Bei einem Ringsegment 81i eines Trägers 60i eines Mitnehmers 33i (Figur 19) ist ein vor die Stirnseiten 192 vorstehender, nach radial innen federnder Rastvorsprung 98i, den man auch als einen Haken ansehen könnte, vorgesehen. Der Rastvorsprung 98i federt nach radial innen, um in eine Rastaufnahme 99i am jeweils anderen Ringsegment 81i einzurasten. Beispielsweise sind die Rastaufnahmen 99i an radial inneren Seiten der Umfangswände 86 vorgesehen. Ein jeweiliger Haltevorsprung 204 steht nach radial außen vor einen Rastvorsprung 98i vor, so dass er in eine korrespondierende Ausnehmung, nämlich die Rastaufnahme 99i einrasten kann.

Ein Mitnehmer 33k umfasst Ringsegmente 81k, 82k, die durch ein Gelenk 107 gelenkig miteinander verbunden sind, beispielsweise durch ein Drehlager, oder wie beim Ausführungsbeispiel mittels eines Filmscharniers. Vor das Ringsegment 81k steht einen Haken 90k vor, der in eine Hakenaufnahme 106k am anderen Ringsegment 82k ein Haken kann. Im Prinzip entsprechen die Ringsegmente 81k und 82k dem Ringsegment 81h, sind jedoch gelenkig miteinander verbunden. Vorteilhaft ist zusätzlich zu der Verhakung noch ein formschlüssiger Halt vorgesehen. Beispielsweise steht vor die Stirnseite 192 des einen Ringsegments 81k ein Vorsprung 108 vor, der in eine Aufnahme 109 an der im montierten Zustand gegenüberliegenden Stirnseite 192 formschlüssig eingreift. Der Vorsprung 108 ist beispielsweise als ein Steck-Zapfen ausgestaltet.

Ein Träger 60m eines Mitnehmers 33m entspricht im Wesentlichen dem Träger 60h, jedenfalls was das Verbinden seiner Ringsegmente 81m mittels Haken 90m angeht, die in Hakenaufnahmen 106 einhakbar sind. Allerdings ist ein innovatives Konzept zur Befestigung von Gebern 35m, vorliegend beispielsweise Magneten realisiert, die zur Betätigung beispielsweise des Sensors 31 dienen. An seinem Innenumfang hat der Träger 60m Aufnahmen 110m, beispielsweise Taschen oder Steckaufnahmen, in die die Geber 35m einsteckbar sind. Die Geber 35m sind in den Aufnahmen 110m verrastbar. Beispielsweise haben die Geber 35m Steckvorsprünge 111, oberhalb derer oder an denen Rastvertiefungen 112 vorgesehen ist. Die Steckvorsprünge 111 können zwischen Rastvorsprüngen 113, die an einander gegenüberliegenden Innenwänden der Aufnahmen 110m vorgesehen sind, hindurch gesteckt werden, bis die Rastvorsprünge 113 in die Rastvertiefungen 112 einrasten.

Ein Träger 60o eines Mitnehmers 33o entspricht zwar etwa dem Träger 60i, jedenfalls was das Konzept des Verhakens bzw. Verbinden seiner Ringsegmente 81o angeht. Der Träger 60o hat Aufnahmen 110o zur Aufnahme von Gebern 35o, beispielsweise Magneten, oder auch sonstigen Elementen, die beispielsweise ein Feld oder Signal erzeugen können. Die Geber 35o haben an ihren Stirnseiten Aufnahmen 114, die in Vorsprünge 115 ein den jeweiligen Böden der Aufnahmen 110o eingreifen und so für einen festen Halt sorgen. Selbstverständlich können die Geber 35o auch in die Aufnahmen 110o eingeklebt werden. Auch ein Klemmsitz ist vorteilhaft.

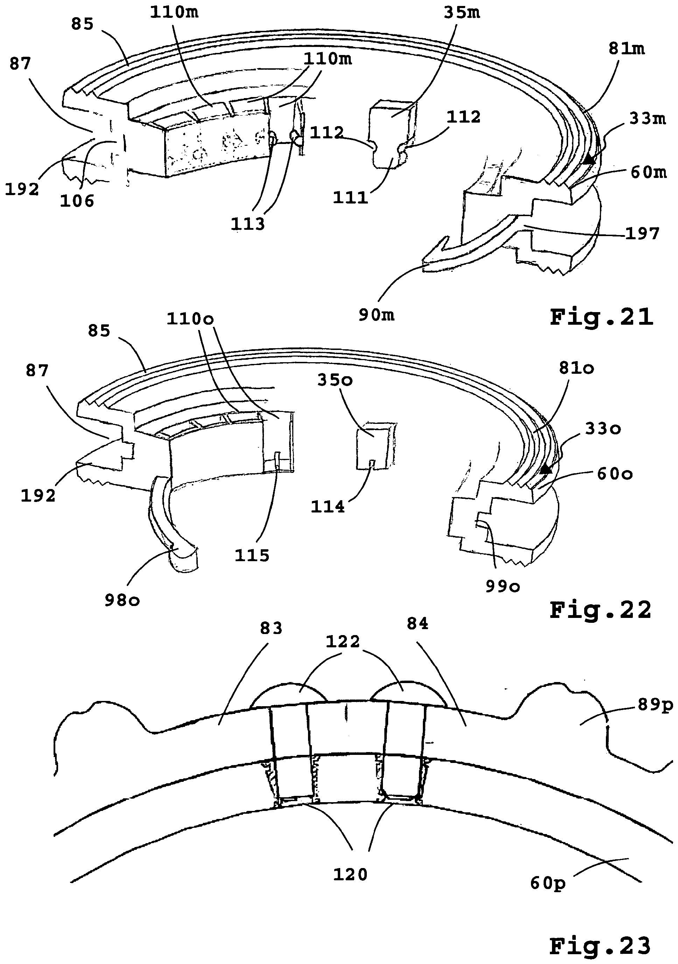

Ein Mitnahmeteil 89p ist an einem Träger 60p gemäß dem in Figur 22 dargestellten Konzept verschraubt. Beispielsweise hat der Träger 60p Bohrungen 120, insbesondere im Mikrogewinde oder dergleichen, die beispielsweise am Boden der Aufnahme 87 oder einem sonstigen Haltekontur vorgesehen sind. Längsenden 83, 84 des Mitnahmeteils 89p sind von Bolzen 122 durchdrungen, beispielsweise Schraubbolzen, Nieten oder dergleichen, die in die Bohrungen oder Aufnahmen 120 eindringen. Somit kann also beispielsweise das Mitnahmeteil 89p relativ dehnfest sein, beispielsweise auch einen Einleger aus Metall umfassen. Dennoch ist das Mitnahmeteil 89p leicht am Träger 60p montierbar. Der Träger 60p kann selbstverständlich wie bei den obigen Ausführungsbeispielen 2 oder mehr Ringsegmente umfassen, die am jeweiligen Kuppelkörper angeordnet und dort miteinander verbunden sind.

An dieser Stelle ist auch nachzutragen, dass selbstverständlich die Ausführungsbeispiele gemäß Figuren 14-20 nur exemplarisch zu verstehen sind, d.h. dass anstelle von 2 Ringsegmenten selbstverständlich auch weitere, beispielsweise 3 oder 4 Ringsegmente zur Bildung eines Gesamt-Rings, vorgesehen sein können.

Selbstverständlich ist es nicht notwendig, ein strangartiges Mitnahmeteil, das offene Längsenden hat, direkt am Träger zu befestigen, wie beim Ausführungsbeispiel gemäß Figur 23. Beispielsweise sind Längsenden 83, 84 eines Mitnahmeteils 89q an einem Träger, beispielsweise dem Träger 60g, anhand eines Verbindungsglieds 125 miteinander verbunden. Das Verbindungsglied 125 ist beispielsweise als ein Stanz-Biegeteil ausgestaltet. Vorzugsweise besteht Das Verbindungsglied 125 aus Metall, zum Beispiel Stahlblech, Aluminiumblech oder dergleichen.

Das Verbindungsglied 125 weist eine Basis 126 auf, die sich über die jeweiligen Längsenden 83, 84 des Mitnahmeteils 89q erstreckt. Beispielsweise ist die Basis 126 am einen Längsende 83 oder 84 angeklebt. Von der Basis 126 stehen an einander entgegengesetzten Seiten jeweils Arme 127 ab. Die Arme 127 können mehrfach oben gebogen werden, so dass sie in Vertiefungen zwischen den Mitnahmevorsprüngen 41 oder Zähnen eingreifen können. Es ist vorteilhaft, die Arme 127 und oder die Basis 126, jedenfalls insgesamt das Verbindungsglied 125 formschlüssig, beispielsweise mittels einem Körner, mit dem Mitnahmeteil 89q zu verbinden.

## Patentansprüche

1. Anhängekupplung für ein Kraftfahrzeug (12), insbesondere ein Personen-Kraftfahrzeug (12), zum Anhängen eines Anhängers an das Kraftfahrzeug (12), mit einem an dem Kraftfahrzeug (12) befestigbaren Kuppelkörperträger (13) und einem an einem freien Endbereich des Kuppelkörperträgers (13) angeordneten, insbesondere außenseitig kugelförmigen, Kuppelkörper (15), auf den eine Zugkupplungsaufnahme (18) einer Zugkupplung (16) des Anhängers aufsetzbar ist, wobei der Kuppelkörper (15) für die Zugkupplungsaufnahme (18) einen diese drehbar lagernden Lagerkörper zum insbesondere mehrachsig drehgelenkigen Schwenken relativ zu dem Kuppelkörperträger (13) bildet, wobei die Anhängekupplung (10; 110) einen an dem Kuppelkörper (15) gelagerten, insbesondere ringförmigen, Mitnehmer (33; 133) aufweist, der von der Zugkupplungsaufnahme (18) mitnehmbar und relativ zu dem Kuppelkörper (15) bewegbar ist und ist und einen Bestandteil einer Sensoranordnung (30) zur Erfassung einer Winkelstellung der Zugkupplung (16) relativ zu dem Kuppelkörperträger (13) bildet, **dadurch gekennzeichnet, dass** der Mitnehmer (33; 133) eine Reihe entlang einer Reihenlinie nebeneinander angeordneter Sensorteilaufnahmen (66) oder eine langgestreckte Sensorteilaufnahme (66) für Sensorgeber (93) oder Sensorelemente aufweist, wobei in den Sensorteilaufnahmen (66) oder in der Sensorteilaufnahme (66) ein Einsteckkörper (90) mit mehreren Sensorgebern (93) und/oder Sensorelementen angeordnet ist, die entlang der Reihenlinie oder einer Längs- oder Umfangserstreckung der Sensorteilaufnahme (66) an oder in dem Einsteckkörper (90) angeordnet sind oder durch den Einsteckkörper (90) gebildet sind.

2. Anhängekupplung nach Anspruch 1, **dadurch gekennzeichnet, dass** der Mitnehmer (33; 133) drehbar und/oder verschieblich an dem Kuppelkörper (15) gelagert ist und der von der Zugkupplungsaufnahme (18) relativ zu dem Kuppelkörper (15) verdrehbar oder verschiebbar ist.

3. Anhängekupplung nach Anspruch 1 oder 2, **dadurch gekennzeichnet, dass** der Mitnehmer (33; 133) einen bezüglich einer Außenoberfläche (23a) des Kuppelkörpers (15) weiter innen angeordneten Träger und ein bezüglich der Außenoberfläche (23a) des Kuppelkörpers (15) weiter außen an dem Träger (60; 160) angeordnetes Mitnahmeteil (80; 180) zur Mitnahme durch die Zugkupplungsaufnahme (18) umfasst.

4. Anhängekupplung nach Anspruch 3, **dadurch gekennzeichnet, dass** der Träger (60; 160) und das Mitnahmeteil (80; 180) anhand mindestens eines Haltebolzens und/oder einer Rastverbindung und/oder einer Hakenverbindung miteinander verbunden sind, wobei die Rastverbindung mindestens einen Rastvorsprung und eine Rastaufnahme und die Hakenverbindung mindestens einen Hakenvorsprung und eine Hakenaufnahme umfasst und/oder dass der Träger (60; 160) mindestens eine Aufnahme für das Mitnahmeteil (80; 180) aufweist.

5. Anhängekupplung nach Anspruch 3 oder 4, **dadurch gekennzeichnet, dass** der Träger (60; 160) in einer Lageraufnahme (34) des Kuppelkörpers (15) beweglich gelagert ist und Lagerflächen zur Lagerung in der Lageraufnahme (34) aufweist, und dass das Mitnahmeteil (80; 180) zwischen den Lagerflächen des Trägers (60; 160) ohne Berührkontakt mit der Lageraufnahme (34) aufgenommen ist.

6. Anhängekupplung nach Anspruch 3, 4 oder 5, **dadurch gekennzeichnet, dass** das Mitnahmeteil (80; 180) einen lang gestreckten, biegeflexiblen Körper, insbesondere einen Zahnriemen, bildet oder aufweist, der an die Außenkontur des Trägers (60; 160) anpassbar ist und mit dem bereits am Kuppelkörper (15) montierten Träger (60; 160) lösbar verbindbar ist.

7. Anhängekupplung nach einem der Ansprüche 3, 4, 5 oder 6, **dadurch gekennzeichnet, dass** der Träger (60; 160) mindestens eine Aufnahme (103), insbesondere eine Steckaufnahme, für einen Endbereich des Mitnahmeteils (80; 180) aufweist derart, dass der Endbereich des Mitnahmeteils bei Gebrauch der Anhängekupplung nicht in Kontakt mit der Zugkupplung (16) des Anhängers gelangt.

8. Anhängekupplung nach einem der vorhergehenden Ansprüche, **dadurch gekennzeichnet, dass** der Mitnehmer (33; 133) mindestens einen Deckel (72) zum Verschließen der Sensorteilaufnahme (66) oder der Anordnung von Sensorteilaufnahmen (66) aufweist.

9. Anhängekupplung nach einem der Ansprüche 3 bis 8, **dadurch gekennzeichnet, dass** der Träger (60; 160) die Reihe entlang einer Reihenlinie nebeneinander angeordneter Sensorteilaufnahmen (66) oder die langgestreckte Sensorteilaufnahme (66) für Sensorgeber (93) oder Sensorelemente aufweist.

10. Anhängekupplung nach einem der Ansprüche 3 bis 9, **dadurch gekennzeichnet, dass** der Träger (60; 160) mindestens zwei Trägersegmente (61), insbesondere Ringsegmente, aufweist, wobei die Trägersegmente (61) vorteilhaft mittels einer Rastanordnung und/oder mindestens einer Klammer und/oder anhand einer Verschraubung und/oder mittels einer Hakenanordnung und/oder durch das Mitnahmeteil (80; 180) und/oder durch ein Gelenk (107) und/oder ein Filmscharnier miteinander verbunden oder verbindbar sind.

11. Anhängekupplung nach einem der Ansprüche 3 bis 10, **dadurch gekennzeichnet, dass** der Träger (60; 160) und/oder das Mitnahmeteil (80; 180) radial mindestens zwei Komponenten oder Schichten enthält und/oder dass an dem Mitnehmer (33; 133), insbesondere zwischen dem Mitnahmeteil (80; 180) und dem Träger (60; 160) und/oder dem Mitnahmeteil (80; 180), eine Kompressionsschicht, insbesondere aus Polyurethan, vorgesehen ist und/oder dass das Mitnahmeteil (80; 180) flexibel ist und bei Druckbeaufschlagung durch die Zugkupplungsaufnahme (18) in Richtung des Trägers (60; 160) nachgibt.

12. Anhängekupplung nach einem der Ansprüche 3 bis 11, **dadurch gekennzeichnet, dass** an dem Mitnahmeteil (80; 180) und und/oder dem Träger (60; 160) eine Drehwinkelkodierung (101, 102) und/oder eine Montagekodierung zum Anbringen des Mitnahmeteils (80; 180) in einem vorbestimmten Drehwinkel und/oder einer vorbestimmten Montageposition vorgesehen ist.

13. Anhängekupplung nach einem der vorhergehenden Ansprüche, **dadurch gekennzeichnet, dass** an dem Mitnehmer (33; 133) mindestens eine Mitnahmevertiefung und/oder mindestens einen Mitnahmevorsprung zum formschlüssigen Eingriff einer Gegenkontur, insbesondere einer Haltebacke, der Zugkupplung (16) des Anhängers vorhanden ist.

14. Anhängekupplung nach Anspruch 13, dass der mindestens eine Mitnahmevorsprung oder die mindestens eine Mitnahmevertiefung (100) zum formschlüssigen Eingriff mit einer Gegenkontur der Zugkupplung (16) zwischen Mitnahmevorsprüngen zum reibschlüssigen und/oder kraftschlüssigen Kontakt mit der Zugkupplung (16) des Anhängers angeordnet ist und/oder dass der mindestens ein Randbereich des mindestens einen Mitnahmevorsprungs oder der mindestens einen Mitnahmevertiefung (100) aus einem härteren Material ist als ein neben diesem Randbereich liegender Abschnitt des Mitnehmers (33; 133), insbesondere des Mitnahmeteils (80; 180).

15. Anhängekupplung nach einem der vorhergehenden Ansprüche, **dadurch gekennzeichnet, dass** der Kuppelkörper (15) zwischen seiner von dem Kuppelkörperträger (13) abgewandten Oberseite und dem Kuppelkörperträger einen Äquatorialbereich mit einem maximalen Außenumfang aufweist und der Mitnehmer (33) oberhalb oder unterhalb des Äquatorialbereichs des Kuppelkörpers (15) angeordnet ist, so dass der maximale Außenumfang des Kuppelkörpers (15) in dem Äquatorialbereich zum Halten der Zugkupplungsaufnahme (18) bereit steht, und/oder dass der Mitnehmer (33) unterhalb der Oberseite des Kuppelkörpers (15) angeordnet ist, so dass an der Oberseite des Kuppelkörpers (15) eine obere Stützfläche vorhanden ist.

## Claims

1. Trailer coupling for a motor vehicle (12), in particular a car (12), for attaching a trailer to the motor vehicle (12), with a coupling body support (13) which may be attached to the motor vehicle (12) and with a coupling body (15), in particular spherical on the outside, which may be fitted on a free end section of the coupling body support (13), and on which may be fitted a towing coupling seating (18) of a towing coupling (16) of the trailer, wherein the coupling body (15) forms for the towing coupling seating (18) a bearing body rotatably supporting the former for swivelling, in particular on a multi-axis swivel-jointed basis, relative to the coupling body support (13), wherein the trailer coupling (10; 110) has mounted on the coupling body (15) a driver (33; 133), in particular annular, which may be driven by the towing coupling seating (18) and is movable relative to the coupling body (15) and forms part of a sensor array (30) for detecting an angular position of the towing coupling (16) relative to the coupling body support (13), **characterised in that** the driver (33; 133) has a row along a line of rows of adjacent sensor element holders (66) or an elongated sensor element holder (66) for sensor pickups (93) or sensor elements, wherein there is located in the sensor element holders (66) or in the sensor element holder (66) a plug-in body (90) with several sensor pickups (93) and/or sensor elements which are arranged along the line of rows or a longitudinal or circumferential extent of the sensor element holder (66) on or in the plug-in body (90) or are formed by the plug-in body (90).

2. Trailer coupling according to claim 1, **characterised in that** the driver (33; 133) is mounted rotatably and/or movably on the coupling body (15) and is rotatable or movable by the towing coupling seating (18) relative to the coupling body (15).

3. Trailer coupling according to claim 1 or 2, **characterised in that** the driver (33; 133) includes a member arranged further inwards relative to an outer surface (23a) of the coupling body (15), and a driving element (80; 180) arranged further outwards on the member (60; 160) relative to the outer surface (23a) of the coupling body (15), for driving by the towing coupling seating (18).

4. Trailer coupling according to claim 3, **characterised in that** the member (60; 160) and the driving element (80; 180) are connected to one another by means of at least one retaining pin and/or a latching connection and/or a hook connection, wherein the latching connection comprises at least one latching projection and one latching location and the hook connection at least one hook projection and one hook holder and/or that the member (60; 160) has at least one location for the driving element (80; 180).

5. Trailer coupling according to claim 3 or 4, **characterised in that** the member (60; 160) is movably mounted in a bearing location (34) of the coupling body (15) and has bearing surfaces for support in the bearing location (34), and that the driving element (80; 180) is held between the bearing surfaces of the member (60; 160) without physical contact with the bearing location (34).

6. Trailer coupling according to claim 3, 4 or 5, **characterised in that** the driving element (80; 180) forms or has a long elongated flexible body, in particular a toothed belt, which may be matched to the external contour of the member (60; 160) and may be releasably connected to the member (60; 160) already mounted on the coupling body (15).

7. Trailer coupling according to any of claims 3, 4, 5 or 6, **characterised in that** the member (60; 160) has at least one location (103), in particular a plug-in socket, for an end section of the driving element (80; 180), such that the end section of the driving element, when the trailer coupling is in use, does not come into contact with the towing coupling (16) of the trailer.

8. Trailer coupling according to any of the preceding claims, **characterised in that** the driver (33; 133) has at least one cover (72) for closing the sensor element holder (66) or the arrangement of sensor element holders (66).

9. Trailer coupling according to any of claims 3 to 8, **characterised in that** the member (60; 160) has the row along a line of rows of adjacent sensor element holders (66) or an elongated sensor element holder (66) for sensor pickups (93) or sensor elements.

10. Trailer coupling according to any of claims 3 to 9, **characterised in that** the member (60; 160) has at least two member segments (61), in particular annular segments, wherein the member segments (61) are or may be advantageously connected to one another by means of a latching arrangement and/or at least one clip and/or with the aid of a screw connection and/or by means of a hook arrangement and/or by the driving element (80; 180) and/or by a hinge (107) and/or a film hinge.

11. Trailer coupling according to any of claims 3 to 10, **characterised in that** the member (60; 160) and/or the driving element (80; 180) include(s) radially at least two components or layers, and/or that the driver (33; 133) is provided, in particular between the driving element (80; 180) and the member (60; 160) and/or the driving element (80; 180), with a compression layer, in particular of polyurethane, and/or that the driving element (80; 180) is flexible and, under pressure-loading from the towing coupling seating (18), yields in the direction of the member (60; 160).

12. Trailer coupling according to any of claims 3 to 11, **characterised in that** there is provided on the driving element (80; 180) and/or the member (60; 160) a rotation angle coding (101, 102) and/or a mounting coding for attaching the driving element (80; 180) in a particular angle of rotation and/or a predetermined mounting position.

13. Trailer coupling according to any of the preceding claims, **characterised in that** there is provided on the driver (33; 133) at least one driving recess and/or at least one driving projection for positive engagement with a mating contour, in particular a holding jaw, of the towing coupling (16) of the trailer.

14. Trailer coupling according to claim 13, **characterised in that** the driving projection or projections or the driving recess or recesses (100) is or are arranged for positive engagement with a mating contour of the towing coupling (16) between driving projections for frictional, or force-closed contact with the towing coupling (16) of the trailer, and/or that the edge area or areas of the driving projection or projections or the driving recess or recesses (100) is of a harder material than a section of the driver (33; 133), in particular of the driving element (80; 180), lying next to this edge area.

15. Trailer coupling according to any of the preceding claims, **characterised in that** the coupling body (15) has between its top facing away from the coupling body support (13), and the coupling body member, an equatorial zone with a maximum outer periphery, and the driver (33) is located above or below the equatorial zone of the coupling body (15), so that the maximum outer periphery of the coupling body (15) is available in the equatorial zone to hold the towing coupling seating (18), and/or that the driver (33) is located below the top of the coupling body (15), so that an upper support surface is provided on the top of the coupling body (15).

## Revendications

1. Attelage pour un véhicule automobile (12), en particulier un véhicule automobile personnel (12), pour l'attelage d'une remorque au véhicule automobile (12), avec un support de corps d'attelage (13) pouvant être fixé au véhicule automobile (12) et avec un corps d'attelage (15) agencé sur une zone d'extrémité libre du support de corps d'attelage (13), en particulier en forme de boule côté extérieur, sur lequel corps un logement d'attelage de traction (18) d'un attelage de traction (16) de la remorque peut être placé, le corps d'attelage (15) pour le logement d'attelage de traction (18) formant un corps de palier logeant celui-ci de manière rotative pour le pivotement à articulation rotative en particulier à plusieurs axes par rapport au support de corps d'attelage (13), l'attelage (10; 110) présentant un entraîneur (33; 133) en particulier annulaire, logé sur le corps d'attelage (15) qui peut être retiré du logement d'attelage de traction (18) et peut être déplacé par rapport au corps d'attelage (15) et forme un constituant d'un agencement de capteur (30) pour la détection d'une position angulaire de l'attelage de traction (16) par rapport au support de corps d'attelage (13), **caractérisé en ce que** l'entraîneur (33 ; 133) présente une rangée de logements de partie de détection (66) agencés le long d'une ligne de rangées les uns à côté des autres ou un logement de partie de détection (66) étiré en longueur pour des émetteurs de détection (93) ou des éléments de capteur, un corps d'enfichage (90) étant agencé avec plusieurs émetteurs de détection (93) et/ou des éléments de capteur dans les logements de partie de détection (66) ou dans le logement de partie de détection (66), lesquels sont agencés le long de la ligne de rangée ou d'une étendue longitudinale ou périphérique du logement de partie de détection (66) sur ou dans le corps d'enfichage (90) ou sont formés par le corps d'enfichage (90).

2. Attelage selon la revendication 1, **caractérisé en ce que** l'entraîneur (33 ; 133) est logé de manière rotative et/ou mobile sur le corps d'attelage (15) et qui peut être tourné ou déplacé par le logement d'attelage de traction (18) par rapport au corps d'attelage (15).

3. Attelage selon la revendication 1 ou 2, **caractérisé en ce que** l'entraîneur (33 ; 133) comporte un support agencé plus à l'intérieur par rapport à une surface extérieure (23a) du corps d'attelage (15) et une partie d'entraînement (80 ; 180) agencée plus à l'extérieur sur le support (60 ; 160) par rapport à la surface extérieure (23a) du corps d'attelage (15) pour l'entraînement par le logement d'attelage de traction (18).

4. Attelage selon la revendication 3, **caractérisé en ce que** le support (60 ; 160) et la partie d'entraînement (80 ; 180) sont reliés entre eux à l'aide d'au moins un boulon de retenue et/ou une liaison encliquetée et/ou une liaison à crochet, la liaison encliquetée comportant au moins une saillie d'encliquetage et un logement d'encliquetage et la liaison à crochet comportant au moins une saillie à crochet et un logement de crochet et/ou **en ce que** le support (60 ; 160) présente au moins un logement pour la partie d'entraînement (80 ; 180).

5. Attelage selon la revendication 3 ou 4, **caractérisé en ce que** le support (60 ; 160) est logé de manière mobile dans un logement de palier (34) du corps d'attelage (15) et présente des surfaces de palier pour le logement dans le logement de palier (34), et **en ce que** la partie d'entraînement (80 ; 180) est reçue entre les surfaces de palier du support (60 ; 160) sans contact avec le logement de palier (34).

6. Attelage selon la revendication 3, 4 ou 5, **caractérisé en ce que** la partie d'entraînement (80 ; 180) forme ou présente un corps souple en flexion, étiré en longueur, en particulier une courroie dentée qui peut être adaptée au contour extérieur du support (60; 160) et peut être reliée de manière détachable au support (60 ; 160) déjà monté sur le corps d'attelage (15).

7. Attelage selon l'une quelconque des revendications 3, 4, 5 ou 6, **caractérisé en ce que** le support (60; 160) présente au moins un logement (103), en particulier un logement d'enfichage pour une zone d'extrémité de la partie d'entraînement (80 ; 180) de telle manière que la zone d'extrémité de la partie d'entraînement ne parvienne pas en contact avec l'attelage de traction (16) de la remorque lors de l'utilisation de l'attelage.

8. Attelage selon l'une quelconque des revendications précédentes, **caractérisé en ce que** l'entraîneur (33 ; 133) présente au moins un couvercle (72) pour la fermeture du logement de partie de détection (66) ou l'agencement de logements de partie de détection (66).

9. Attelage selon l'une quelconque des revendications 3 à 8, **caractérisé en ce que** le support (60 ; 160) présente la rangée de logements de partie de détection (66) agencés le long d'une ligne de rangées les uns à côté des autres ou le logement de partie de détection (66) étiré en longueur pour des émetteurs de détection (93) ou des éléments de capteur.

10. Attelage selon l'une quelconque des revendications 3 à 9, **caractérisé en ce que** le support (60 ; 160) présente au moins deux segments porteurs (61), en particulier des segments annulaires, les segments porteurs (61) étant reliés ou pouvant être reliés entre eux avantageusement à l'aide d'un agencement d'encliquetage et/ou au moins une attache et/ou à l'aide d'un vissage et/ou à l'aide d'un agencement à crochet et/ou par la partie d'entraînement (80; 180) et/ou par une articulation (107) et/ou par une charnière à film.

11. Attelage selon l'une quelconque des revendications 3 à 10, **caractérisé en ce que** le support (60 ; 160) et/ou la partie d'entraînement (80 ; 180) contient radialement au moins deux composants ou couches et/ou **en ce qu'**une couche de compression, en particulier de polyuréthane est prévue sur l'entraîneur (33 ; 133), en particulier entre la partie d'entraînement (80 ; 180) et le support (60 ; 160) et/ou la partie d'entraînement (80 ; 180) et/ou **en ce que** la partie d'entraînement (80 ; 180) est flexible et cède en cas de sollicitation par pression par le logement de couplage de traction (18) en direction du support (60 ; 160).

12. Attelage selon l'une quelconque des revendications 3 à 11, **caractérisé en ce qu'**un codage d'angle de rotation (101, 102) et/ou un codage de montage est prévu pour le montage de la partie d'entraînement (80 ; 180) dans un angle de rotation prédéterminé et/ou une position de montage prédéterminée sur la partie d'entraînement (80 ; 180) et/ou le support (60 ; 160).

13. Attelage selon l'une quelconque des revendications précédentes, **caractérisé en ce qu'**au moins une cavité d'entraînement et/ou au moins une saillie d'entraînement est présente pour l'engagement à complémentarité de formes d'un contour antagoniste, en particulier d'une mâchoire de retenue, de l'attelage de traction (16) de la remorque sur l'entraîneur (33 ; 133).

14. Attelage selon la revendication 13, **caractérisé en ce que** l'au moins une saillie d'entraînement ou l'au moins une cavité d'entraînement (100) est agencée pour l'engagement à complémentarité de formes avec un contour antagoniste de l'attelage de traction (16) entre des saillies d'entraînement pour le contact par friction et/ou à force avec l'attelage de traction (16) de la remorque et/ou **en ce que** l'au moins une zone de bord de l'au moins une saillie d'entraînement ou l'au moins une cavité d'entraînement (100) est en un matériau plus dur qu'une section se trouvant à côté de cette zone de bord de l'entraîneur (33 ; 133), en particulier de la partie d'entraînement (80 ; 180).

15. Attelage selon l'une quelconque des revendications précédentes, **caractérisé en ce que** le corps d'attelage (15) présente entre son côté supérieur éloigné du support de corps d'attelage (13) et le support de corps d'attelage une zone équatoriale avec une périphérie extérieure maximale et l'entraîneur (33) est agencé au-dessus ou en dessous de la zone équatoriale du corps d'attelage (15) de sorte que la périphérie extérieure maximale du corps d'attelage (15) soit prête dans la zone équatoriale pour le maintien du logement d'attelage de traction (18), et/ou **en ce que** l'entraîneur (33) est agencé en dessous du côté supérieur du corps d'attelage (15) de sorte qu'une surface d'appui supérieure soit présente sur le côté supérieur du corps d'attelage (15).
